# EUROPÄISCHE PATENTSCHRIFT

(11) **EP 1 668 041 B1**
(45) Veröffentlichungstag und Bekanntmachung des Hinweises auf die Patenterteilung: **24.01.2007**
(21) Anmeldenummer: 04765160.9
(22) Anmeldetag: 14.09.2004
(51) Int. Cl.: C08F 8/12, C08F 267/04, C08F 222/08, C11D 3/37, C14C 3/22

(54) **VERFAHREN ZUR HERSTELLUNG VON COPOLYMERISATEN**
METHOD FOR THE PRODUCTION OF COPOLYMERS
PROCEDE DE PRODUCTION DE COPOLYMERISATS

(30) Priorität: 19.09.2003 DE 10343904
(43) Veröffentlichungstag der Anmeldung: 14.06.2006
(73) Patentinhaber: BASF Aktiengesellschaft, 67056 Ludwigshafen (DE)
(72) Erfinder: KLÜGLEIN, Matthias, 67071 Ludwigshafen (DE); LEHMANN, Bernhard, 67459 Böhl-Iggelheim (DE); HÜFFER, Stephan, 67063 Ludwigshafen (DE); GOFFING, Friedrich, 67435 Neustadt (DE); SCHNEIDER, Tanja, 64625 Bensheim (DE); GÜMBEL, Helmut, 67814 Dannenfels (DE)
(86) Internationale Anmeldenummer: PCT/EP2004/010244
(87) Internationale Veröffentlichungsnummer: WO 2005/033151

(56) Entgegenhaltungen:
- EP-A- 0 945 473
- EP-A- 0 945 501
- DE-A- 4 205 839

## Beschreibung

Die vorliegende Erfindung betrifft ein Verfahren zur Herstellung von Copolymerisaten, dadurch gekennzeichnet, dass man
(A) mindestens ein ethylenisch ungesättigtes Dicarbonsäureanhydrid, abgeleitet von mindestens einer Dicarbonsäure mit 4 bis 8 C-Atomen,
(B) mindestens eine vinylaromatische Verbindung und
(C) optional mindestens ein von (A) verschiedenes ethylenisch ungesättigtes Comonomer mit mindestens einem Heteroatom, copolymerisiert,
(D) mit mindestens einer Verbindung der allgemeinen Formel I a oder I b 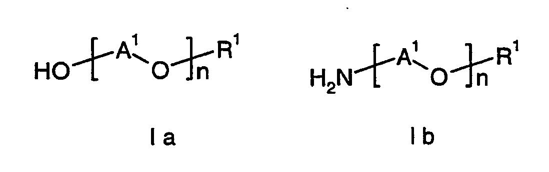 umsetzt,
   mit Wasser oder wässriger alkalischer Lösung hydrolysiert
   und nach der Hydrolyse erneut Initiator zugibt,
wobei in Formel I a und I b die Variablen wie folgt definiert sind:
- A¹: C₂-C₂₀-Alkylen, gleich oder verschieden,
- R¹: C₁-C₃₀-Alkyl, linear oder verzweigt,
- n: eine ganze Zahl von 1 bis 200.

Zur Herstellung von Leder können bei der Vor-, Haupt- und Nachgerbung Polymere eingesetzt werden. Durch den Einsatz von Polymeren in der Vorgerbung kann dabei in vielen Fällen auf Cr-Verbindungen ganz oder zumindest teilweise verzichtet werden. Die Wahl der Polymeren kann die Eigenschaften des Lederendprodukts beeinflussen. Für die Wahl der Polymeren werden in der Literatur unterschiedliche Vorschläge gemacht.

In EP-A 0 628 085 wird die Verwendung von Copolymeren aus Maleinsäureanhydrid und optional einem zweiten Monomer, beispielsweise Styrol, Isobuten oder Vinylacetat beschrieben, wobei die Copolymeren vor der Verwendung zum Nachgerben und Füllen mit alkoxylierten Alkoholen umgesetzt werden.

Aus EP-A 0 372 746 ist die Verwendung von amphiphilen Copolymeren aus Methacrylsäure und beispielsweise Cetyl-Eicosyl-Methacrylat (Verfahrensbeispiel A) oder von Acrylsäure mit α-Hexadecen (Verfahrensbeispiel C) zur Nachbehandlung von Leder bekannt. Die Verwendung derartiger Polymerer ist auf die Nachbehandlung von Chrom-gegerbten Ledern beschränkt (s. Seite 8, Zeile 50-54).

Zur Behandlung von insbesondere weichen Ledern sind die im Stand der Technik genannten Polymere jedoch noch nicht optimal. Beispielsweise lassen sich die nach den bisherigen Methoden hergestellten Leder in ihrer Fülle, ihrer Narbenbeschaffenheit und den Oberflächeneigenschaften verbessern. Weiterhin ist die Verteilung der in der Nachgerbung eingesetzten Fette im Lederquerschnitt noch nicht optimal.

Copolymerisate aus partiell mit Polyethylenglykol verestertem Maleinsäureanhydrid und Styrol sind aus anderen Anwendungsgebieten bekannt. Beispielsweise beschreibt EP-A 0 306 449, Beispiel 1 die Herstellung von Styrol-Maleinsäurehalbester-Copolymerisaten durch-Copolymerisation von Styrol und Maleinsäureanhydrid und anschließende Veresterung mit Polyethylenglykol, wobei braune Produkte entstehen, die sich als Fließverbesserer von Zement eignen.

Die genauen Gründe für die Bildung brauner Produkte während der in EP 0 306 449, Beispiel 1 beschriebenen Reaktion sind nicht bekannt.

Aus EP-A 0 945 473 sind Verfahren zur Herstellung von Styrol-Maleinsäurehalbester-Copolymerisaten bekannt. Die Verfahren werden entweder als Zweistufenverfahren ausgeführt (Beispiele 1 bis 3), wobei unter Zweistufenverfahren zu verstehen ist, dass ein Styrol-Maleinsäureanhydrid-Copolymer einer partiellen Veresterung unterworfen wird. Derartige Zweistufenverfahren sind jedoch verhältnismäßig aufwändig. In einer anderen offenbarten Variante, die zu gefärbten Produkten führt, wird das Verfahren als Einstufenverfahren ausgeübt (Beispiele 7 bis 9).

Aus EP-A 0 945 501 ist bekannt, dass durch ein Zweistufenverfahren hergestellte Styrol-Maleinsäurehalbester-Copolymerisate als Zusatz in Waschmitteln geeignet sind, die einen Builder und ein Tensid enthalten. Das Syntheseverfahren ist jedoch relativ aufwändig. Auch lässt sich die Reinigungswirkung der offenbarten Styrol-Maleinsäurehalbester-Copolymerisate noch verbessern.

Es bestand daher die Aufgabe, ein verbessertes Verfahren zur Herstellung von Copolymerisaten bereitzustellen, das die oben genannten Schwächen vermeidet und zu wenig gefärbten Produkten führt.

Demgemäß wurde das eingangs definierte Verfahren gefunden. Das eingangs definierte Verfahren ist dadurch gekennzeichnet, dass man folgende Comonomere miteinander copolymerisiert:
(A) mindestens ein ethylenisch ungesättigtes Dicarbonsäureanhydrid, abgeleitet von mindestens einer Dicarbonsäure mit 4 bis 8 C-Atomen, beispielsweise Maleinsäureanhydrid, Itaconsäureanhydrid, Citraconsäureanhydrid, Methylenmalonsäureanydrid, bevorzugt Itaconsäureanhydrid und Maleinsäureanhydrid und ganz besonders bevorzugt Maleinsäureanhydrid;
(B) mindestens eine vinylaromatische Verbindung, beispielsweise der allgemeinen Formel VIII 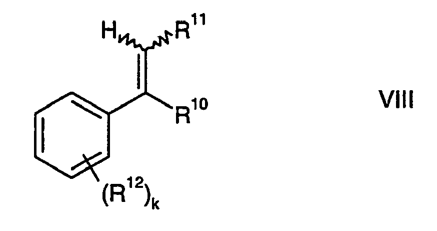 in der R¹⁰ und R¹¹ unabhängig voneinander jeweils für Wasserstoff, Methyl oder Ethyl stehen, R¹² Methyl oder Ethyl bedeutet und k eine ganze Zahl von 0 bis 2 bedeutet; bevorzugt sind R¹⁰ und R¹¹ jeweils Wasserstoff, und bevorzugt gilt k = 0;
   und
(C) optional mindestens ein von (A) verschiedenes ethylenisch ungesättigtes Comonomer mit mindestens einem Heteroatom.
   Man setzt mit
(D) mindestens einer Verbindung der allgemeinen Formel I a oder I b, vorzugsweise I a 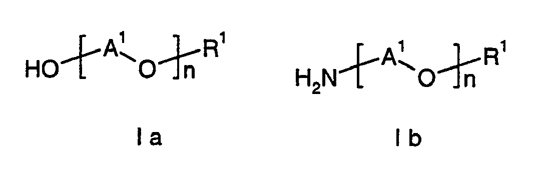 um, in der die Variablen wie folgt definiert sind:
   - A¹: C₂-C₂₀-Alkylen, beispielsweise -(CH₂)₂-, -CH₂-CH(CH₃)-, -(CH₂)₃-, -CH₂-CH(C₂H₅)-, -CH₂-CH(iso·C₃H₇)-, -CH₂-CH(n·C₄H₉)-, -(CH₂)₄-, -(CH₂)₅-, -(CH₂)₆-, vorzugsweise C₂-C₄-Alkylen; insbesondere -(CH₂)₂-, -CH₂-CH(CH₃)- und -CH₂-CH(C₂H₅)-;
   - R¹: C₁-C₃₀-Alkyl, linear oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, iso-Decyl, 2-Propylheptyl, n-Dodecyl, iso-Tridecyl, lineares und verzweigtes C₁₃- und C₁₅-Alkyl, n-Hexadecyl, n-Octadecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl; ganz besonders bevorzugt Methyl;
   - n: eine ganze Zahl von 1 bis 200, bevorzugt 4 bis 50.

Die Gruppen A¹ können natürlich nur dann verschieden sein, wenn n eine Zahl größer 1 ist oder wenn man verschiedene Verbindungen der allgemeinen Formel I a und/oder I b einsetzt.

In einer Ausführungsform der vorliegenden Erfindung setzt man Mischungen von verschiedenen Komponenten (D) beispielsweise der Formel I a ein. Insbesondere kann man solche Mischungen an Verbindungen der Formel I a einsetzen, in denen - bezogen jeweils auf die Mischung - mindestens 95 mol-%, bevorzugt mindestens 98 mol-% bis maximal 99,8 mol-% R¹ für C₁-C₃₀-Alkyl steht und mindestens 0,2 mol-% und maximal 5 mol-%, bevorzugt maximal 2 mol-% für Wasserstoff.

Nach der Copolymerisation und der Umsetzung mit (D) hydrolysiert man mit Wasser, wässriger alkalischer Lösung oder verdünnter wässriger Säure, wobei Hydrolyse mit Wasser oder wässriger alkalischer Lösung bevorzugt ist.

Nach der Hydrolyse gibt man erfindungsgemäß erneut Initiator zu, wobei der oder die Initiatoren gleich oder verschieden von dem oder den Initiatoren der Copolymerisation sein können.

Besondere Beispiele für Verbindungen der allgemeinen Formel I a sind
- Methylendgruppenverschlossene Polyethylenglykole der Formel HO-(CH₂CH₂O)ₘ-CH₃ mit m = 1 bis 200, vorzugsweise 4 bis 100, besonders bevorzugt 4 bis 50
- Methylendgruppenverschlossene Blockcopolymere aus Ethylenoxid, Propylenoxid und/oder Butylenoxid mit einem Molekulargewicht Mₙ von 300 bis 5000 g/mol
- Methylendgruppenverschlossene statistische Copolymere aus Ethylenoxid, Propylenoxid und/oder Butylenoxid mit einem Molekulargewicht Mₙ von 300 bis 5000 g/mol
- Alkoxylierte C₂- bis C₃₀-Alkohole, insbesondere n-Butanolalkoxylate, n-Hexanolalkoxylate, Fettalkoholalkoxylate, Oxoalkohol-alkoxylate oder GuerbetAlkoholalkoxylate, wobei die Alkoxylierung mit Ethylenoxid, Propylenoxid und/oder Butylenoxid durchgeführt werden kann, Beispiele sind
- C₁₃-C₁₅-Oxoalkoholethoxylate mit 3 bis 30 Ethylenoxideinheiten
- C₁₃-Oxoalkoholethoxylate mit 3 bis 30 Ethylenoxideinheiten,
- C₁₂C₁₄-Fettalkoholethoxylate mit 3 bis 30 Ethylenoxideinheiten,
- C₁₀-Oxoalkoholethoxylate mit 3 bis 30 Ethylenoxideinheiten,
- C₁₀-Guerbetalkoholethoxylate mit 3 bis 30 Ethylenoxideinheiten,
- C₉-C₁₁-Oxoalkoholalkoxylate mit 2 bis 20 Ethylenoxideinheiten, 2 bis 20 Propylenoxideinheiten und/oder 1 bis 5 Butylenoxideinheiten;
- C₄-C₂₀-Alkoholalkoxylate mit 2 bis 20 Ethylenoxideinheiten, 2 bis 20 Propylenoxideinheiten und/oder 1 bis 5 Butylenoxideinheiten
- C₁₃-C₁₅-Oxoalkoholalkoxylate mit 2 bis 20 Ethylenoxideinheiten, 2 bis 20 Propylenoxideinheiten und/oder 1 bis 5 Butylenoxideinheiten;
- C₄-C₂₀-Alkoholethoxylate mit 3 bis 30 Ethylenoxideinheiten.

Bevorzugte Beispiele für Verbindungen der Formel I b sind Methylendgruppenverschlossene Polyethylenglykolamine der Formel H₂N-(CH₂CH₂O)ₘ-CH₃ mit m = 1 bis 200, vorzugsweise 4 bis 100, besonders bevorzugt 4-50.

Bevorzugt setzt man als Comonomer (B) α-Methylstyrol und ganz besonders bevorzugt Styrol ein.

Ganz besonders bevorzugt wird als Comonomer (C) eingesetzt: Acrylsäure, Methacrylsäure, Methylacrylat, Methylmethacrylat, Acrylamid, Vinyl-n-butylether, Vinyl-isobutylether, N-Vinylformamid, N-Vinylpyrrolidon, 1-Vinylimidazol und 4-Vinylpyridin.

In einer Ausführungsform der vorliegenden Erfindung führt man zunächst eine Copolymerisation von (A), (B) und gegebenenfalls (C) durch und setzt anschließend mit (D) um.

In einer anderen Ausführungsform der vorliegenden Erfindung wird die Copolymerisation von (A), (B) und gegebenenfalls (C) in Gegenwart der gesamten Menge oder Anteilen der einzusetzenden Verbindung (D) durchgeführt.

Die gesamte Menge an (D) berechnet man so, dass man von einer vollständigen Umsetzung von (D) ausgeht und 5 bis 80 mol-%, bevorzugt 10 bis 67 mol-%, besonders bevorzugt 20 bis 50 mol-% (D), bezogen auf alle Carboxylgruppen des Copolymerisats, einsetzt. Unter dem Begriff "alle im Polymerisat enthaltene Carboxylgruppen" sind im Rahmen der vorliegenden Erfindung diejenigen Carboxylgruppen aus einpolymerisierten Comonomeren (A) und gegebenenfalls (C) zu verstehen, die als Anhydrid, als C₁-C₄-Alkylester oder als Carbonsäure vorliegen.

Man startet die Copolymerisation vorteilhaft durch Initiatoren, beispielsweise radikalische zerfallende Verbindungen wie Peroxide oder Hydroperoxide. Als Peroxide bzw. Hydroperoxide seien Di-tert.-butylperoxid, tert.-Butylperoctoat, tert.-Butylperpivalat, tert.-Butylper-2-ethylhexanoat, tert.-Butylper-maleinat, tert.-Butylperisobutyrat, Benzoylperoxid, Diacetylperoxid, Succinylperoxid, p-Chlorbenzoylperoxid, Dicyclohexylperoxiddicarbonat, beispielhaft genannt. Auch der Einsatz von Redoxinitiatoren ist geeignet, beispielsweise Kombinationen aus Wasserstoffperoxid oder Natriumperoxodisulfat oder einem der vorstehend genannten Peroxide mit einem Reduktionsmittel. Als Reduktionsmittel sind beispielsweise geeignet: Ascorbinsäure, Weinsäure, Fe(II)-Salze wie beispielsweise FeSO₄, Natriumbisulfit, Kaliumbisulfit.

Geeignete Initiatoren sind außerdem Azoverbindungen wie 2,2'-Azobis(isobutyronitril), 2,2'-Azobis(2-methylpropion-amidin)dihydrochlorid und 2,2'-Azobis(4-methoxy-2,4-dimethylvaleronitril).

Im allgemeinen wird Initiator in Mengen von 0,1 bis 20 Gew.-%, vorzugsweise 0,2 bis 15 Gew.-%, berechnet auf die Masse aller Comonomeren, eingesetzt.

In einer bevorzugten Ausführungsform arbeitet man ohne Lösungsmittel oder in Gegenwart von nur geringen Mengen an Lösungsmittel, d.h. maximal 10 Gew.-%, bezogen auf die Gesamtmasse an Comonomeren (A), (B) sowie gegebenenfalls (C). Als Lösungsmittel sind unter den Bedingungen der Copolymerisation und der Veresterung beziehungsweise Amidbildung inerte Stoffe zu verstehen, insbesondere aliphatische und aromatische Kohlenwasserstoffe wie beispielsweise Cyclohexan, n-Heptan, Isododekan, Benzol, Toluol, Ethylbenzol, Xylol als Isomerengemisch, meta-Xylol, ortho-Xylol. Arbeitet man bei der Umsetzung mit (D) ohne sauren Katalysator, so kann man die Copolymerisation und/oder Umsetzung mit (D) auch in Lösungsmitteln, gewählt aus Ketonen wie beispielsweise Aceton, Methylethylketon, oder cyclischen oder nicht-cyclischen Ethern wie beispielsweise Tetrahydrofuran oder Di-n-Butylether durchführen.

Die Reihenfolge der Zugabe der Comonomere kann man auf verschiedene Weise vornehmen.

In einer Ausführungsform des erfindungsgemäßen Verfahrens legt man eine Mischung aus (D) und (A) vor und gibt Initiator und gleichzeitig (B) und gegebenenfalls (C) zu.

Dabei ist es bevorzugt, (B) und gegebenenfalls (C) nach Art eines Zulaufverfahrens zuzugeben.

In einer Ausführungsform der vorliegenden Erfindung legt man eine Mischung aus (D) und (A) vor und gibt Initiator und gleichzeitig (B) und gegebenenfalls (C) nach Art eines Zulaufverfahrens zu, wobei Initiator, (B) und gegebenenfalls (C) jeweils in (D) gelöst sind.

In einer Ausführungsform der vorliegenden Erfindung legt man eine Mischung aus (D) und (A) vor und gibt Initiator und (B) und (C) nach Art eines Zulaufverfahrens zu, wobei die Zulaufgeschwindigkeiten von (B) und (C) unterschiedlich gewählt werden.

In einer anderen Ausführungsform der vorliegenden Erfindung legt man eine Mischung aus (D) und (A) vor und gibt Initiator und (B) und (C) nach Art eines Zulaufverfahrens zu, wobei die Zulaufgeschwindigkeiten von (B) und (C) gleich gewählt werden.

In einer Ausführungsform der vorliegenden Erfindung gibt man während der Zugabe von (B) und gegebenenfalls (C) weiteren Initiator zu.

In einer Ausführungsform der vorliegenden Erfindung liegt das Molverhältnis (A) : (B) im Bereich von 1 : 0,1 bis 1 : 10, bevorzugt 1 : 0,2 bis 1 : 1, besonders bevorzugt 1 : 0,3 bis 1 : 0,98 und ganz besonders bevorzugt 1 : 0,4 bis 1 : 0,97.

In einer Ausführungsform der vorliegenden Erfindung liegt das Molverhältnis (A) zu (C) im Bereich von 1 : 0 bis 1 : 10, bevorzugt 10 : 1 bis 1 : 1, besonders bevorzugt 9 : 1 bis 4:1.

In einer Ausführungsform der vorliegenden Erfindung liegt das Molverhältnis (A) zu [(B) + (C)] im Bereich von 2 : 1 bis 1 : 20, bevorzugt 1,5 : 1 bis 1 : 10, besonders bevorzugt 1,1 : 1 bis 1 : 6,

In einer Ausführungsform der vorliegenden Erfindung liegt die Temperatur für die Copolymerisation von (A), (B) und gegebenenfalls (C) im Bereich von 40 bis 120°C, bevorzugt 60 bis 115°C.

Der Druck während der Copolymerisation kann beispielsweise im Bereich von 1 bis 10 bar, bevorzugt 1 bis 3 bar liegen.

Man kann Regler einsetzen, beispielsweise Mercaptoethanol oder n-Dodecylmercaptan. Geeignete Mengen sind beispielsweise 0,1 bis 6 Gew.-%, bezogen auf die Masse der eingesetzten Comonomeren. Bevorzugt arbeitet man ohne Einsatz von Reglern.

Man kann während der Copolymerisation einen oder mehrere Polymerisationsinhibitor in geringen Mengen zugeben, beispielsweise Hydrochinonmonomethylether. Polymerisationsinhibitor kann man vorteilhaft mit (B) und gegebenenfalls (C) dosieren. Geeignete Mengen an Polymerisationsinhibitor sind 0,01 bis 1 Gew.-%, vorzugsweise 0,05 bis 0,1 Gew.-%, berechnet auf die Masse aller Comonomeren. Die Zugabe von Polymerisationsinhibitor ist insbesondere dann bevorzugt, wenn man die Copolymerisation bei Temperaturen über 80°C durchführt.

Nach Beendigung der Zugabe von (B), gegebenenfalls (C), gegebenenfalls (D) sowie gegebenenfalls Initiator kann man nachreagieren lassen.

Die Dauer der Copolymerisation beträgt im Allgemeinen 0,5 bis 8 Stunden, bevorzugt 1 bis 5 Stunden.

Die Dauer der Umsetzung mit (D) kann 0,5 bis 8 Stunden, bevorzugt 1 bis 5 Stunden betragen.

Führt man das erfindungsgemäße Verfahren so durch, dass man (A), (B) und gegebenenfalls (C) in Gegenwart der gesamten Menge an (D) copolymerisiert, so ist eine Reaktionsdauer von insgesamt 0,5 bis 8 Stunden, bevorzugt 1 bis 5 Stunden geeignet.

Man kann die Umsetzung mit (D) in Abwesenheit oder auch Anwesenheit von Katalysatoren durchführen, insbesondere sauren Katalysatoren wie z.B. Schwefelsäure, Methansulfonsäure, p-Toluolsulfonsäure, n-Dodecylbenzolsulfonsäure, Salzsäure oder sauren Ionenaustauschern.

In einer Ausführungsform der vorliegenden Erfindung führt man die Umsetzung mit (D) in Abwesenheit von Katalysatoren bei einer Temperatur im Bereich von 60 bis 130°C durch, bevorzugt von 100 bis 120°C.

In einer Ausführungsform der vorliegenden Erfindung führt man die Umsetzung mit (D) in Anwesenheit von Katalysatoren durch. Die Dauer der Umsetzung mit (D) kann 0,25 bis 1 Stunde betragen.

In einer Ausführungsform der vorliegenden Erfindung führt man die Umsetzung mit (D) in Anwesenheit von sauren Katalysatoren bei einer Temperatur im Bereich von 80 bis 95°C durch.

In einer weiteren Variante des beschriebenen Verfahrens führt man die Umsetzung mit (D) in Anwesenheit eines Schleppmittels durch, das mit bei der Reaktion gegebenenfalls entstehendem Wasser ein Azeotrop bildet.

Im Allgemeinen regiert unter den Bedingungen der oben beschriebenen Schritte (D) vollständig oder zu einem gewissen Prozentsatz mit den Carboxylgruppen einpolymerisierter Anhydride (A) und gegebenenfalls den Carboxylgruppen aus einpolymerisiertem (C). Im Allgemeinen bleiben weniger als 40 mol-% als nicht umgesetztes (D) zurück.

Es ist möglich, durch an sich bekannte Methoden wie beispielsweise Extraktion nicht umgesetztes (D) von den nach dem erfindungsgemäßen Verfahren erhältlichen Copolymerisaten abzutrennen.

Das oder die Monomere (C), das bzw. die optional im erfindungsgemäßen Verfahren copolymerisiert werden können, sind von (A) verschieden. Als bevorzugte Monomere (C) mit mindestens einem Heteroatom sind zu nennen:
C₃-C₈-Carbonsäurederivate der allgemeinen Formel II 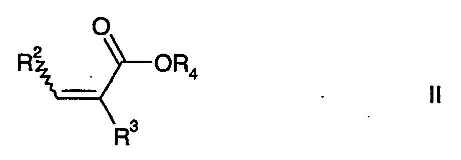 Acrylamide der Formel III, 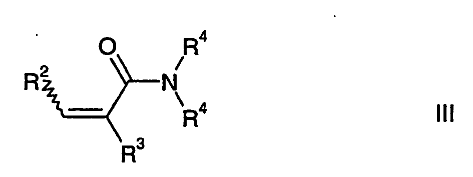 nicht-cyclische Amide der allgemeinen Formel IV a und cyclische Amide der allgemeinen Formel IV b 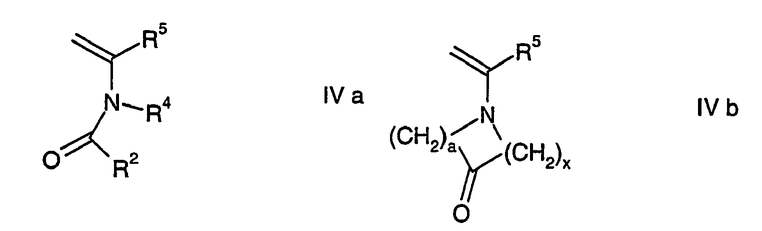 C₁-C₂₀-Alkyl-vinylether wie Methyl-vinylether, Ethyl-vinylether, n-Propyl-vinylether, iso-Propyl-vinylether, n-Butyl-vinylether, iso-Butyl-vinylether, 2-Ethylhexyl-vinylether oder n-Octadecyl-vinylether; N-Vinyl-derivate von stickstoffhaltigen aromatischen Verbindungen, bevorzugt N-Vinylimidazol, 2-Methyl-1-vinylimidazol, N-Vinyloxazolidon, N-Vinyltriazol, 2-Vinyl-pyridin, 4-Vinylpyridin, 4-Vinylpyridin-N-oxid, N-Vinylimidazolin, N-Vinyl-2-methylimidazolin,
α,β-ungesättigte Nitrile wie beispielsweise Acrylnitril, Methacrylnitril;
alkoxylierte ungesättigte Ether der allgemeinen Formel V, 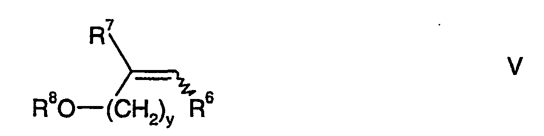 Ester und Amide der allgemeinen Formel VI, 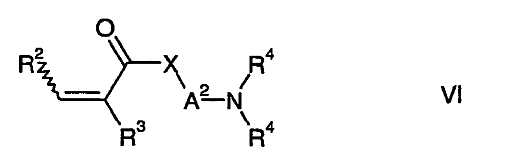 ungesättigte Ester der allgemeinen Formel VII 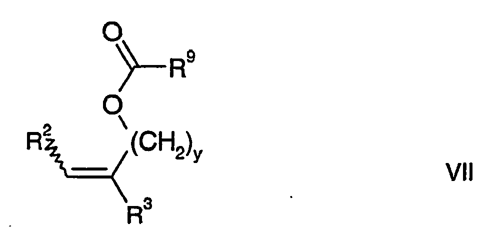 Phosphat-, Phosphonat-, Sulfat-, und Sulfonatgruppen-haltige Comonomere wie beispielsweise [2-{(Meth)acryloyloxy}-ethyl]-phosphat, 2-(Meth)acrylamido-2-methyl-1-propansulfonsäure;
wobei die Variablen wie folgt definiert sind:
- A²: C₂-C₂₀-Alkylen, beispielsweise -(CH₂)₂-, -CH₂-CH(CH₃)-, -(CH₂)₃-, -CH₂-CH(C₂H₅)-, -CH₂-CH(iso·C₃H₇)-, -CH₂-CH(n·C₄H₉)-, -(CH₂)₄-, -(CH₂)₅-, -(CH₂)₆-, vorzugsweise C₂-C₄-Alkylen; insbesondere -(CH₂)₂-, -CH₂-CH(CH₃)- und -CH₂-CH(C₂H₅)-;
- R², R³: gleich oder verschieden und gewählt aus unverzweigten oder verzweigten C₁-C₅-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, besonders bevorzugt C₁-C₄-Alkyl wie Methyl, Ethyl, n-Propyl, iso-Propyl, n-Butyl, iso-Butyl, sec.-Butyl und tert.-Butyl;
und insbesondere Wasserstoff;
- R⁴: gleich oder verschieden und C₁-C₂₂-Alkyl, verzweigt oder unverzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Eicosyl; besonders bevorzugt C₁-C₄-Alkyl wie Methyl, Ethyl, n-Propyl, iso-Propyl, n-Butyl, iso-Butyl, sec.-Butyl und tert.-Butyl; oder besonders bevorzugt Wasserstoff;
- R⁵: Wasserstoff oder Methyl,
- x: eine ganze Zahl im Bereich von 2 bis 6, vorzugsweise 3 bis 5;
- y: eine ganze Zahl, ausgewählt aus 0 oder 1, vorzugsweise 1;
- a: eine ganze Zahl im Bereich von 0 bis 6, vorzugsweise im Bereich von 0 bis 2;
- R⁶, R⁷: gleich oder verschieden und gewählt aus Wasserstoff, unverzweigten oder verzweigten C₁-C₁₀-Alkyl und wobei unverzweigtes und verzweigtes C₁-C₁₀-Alkyl wie oben stehend definiert ist;
- X: Sauerstoff oder N-R⁴;
- R⁸: [A¹-O]ₙ-R⁴,
- R⁹: gewählt aus unverzweigten oder verzweigten C₁-C₂₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Tetradecyl, n-Hexadecyl, n-Octadecyl, n-Eicosyl; bevorzugt C₁-C₁₄-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl, n-Dodecyl, n-Tetradecyl,
und insbesondere Wasserstoff oder Methyl;

Die übrigen Variablen sind wie oben stehend definiert.

Beispielhaft ausgewählte Verbindungen der Formel III sind (Meth)Acrylamide wie Acrylamid, N-Methylacrylamid, N,N-Dimethylacrylamid, N-Ethylacrylamid, N-Propylacrylamid, N-tert.-Butylacrylamid, N-tert.-Octylacrylamid, N-Undecylacrylamid oder die entsprechenden Methacrylamide.

Beispielhaft ausgewählte Verbindungen der Formel IV a sind N-Vinylcarbonsäureamide wie N-Vinylformamid, N-Vinyl-N-methylfomamid, N-Vinylacetamid oder N-Vinyl-N-methylacetamid; Beispielhaft ausgewählte Vertreter für Verbindungen der Formel IV b sind N-Vinylpyrrolidon, N-Vinyl-4-piperidon und N-Vinyl-ε-caprolactam.

Beispielhaft ausgewählte Verbindungen der Formel VI sind (Meth)acrylsäureester und -am ide wie N,N-Dialkylaminoalkyl(meth)acrylate oder
N,N-Dialkylaminoalkyl(meth)acrylamide; Beispiele sind N,N-Dimethylaminoethylacrylat,
N,N-Dimethylaminoethylmethacrylat, N,N-Diethylaminoethylacrylat,
N,N-Diethylaminoethylmethacrylat, N,N-Dimethylaminopropylacrylat,
N,N-Dimethylaminopropylmethacrylat, N,N-Diethylaminopropylacrylat,
N,N-Diethylaminopropylmethacrylat, 2-(N,N-Dimethylamino)ethylacrylamid,
2-(N,N-Dimethylamino)ethylmethacrylamid, 2-(N,N-Diethylamino)ethylacrylamid,
2-(N,N-Diethylamino)ethylmethacrylamid, 3-(N,N-Dimethylamino)propylacrylamid und
3-(N , N-Dimethylamino)propylmethacrylamid.

Beispielhaft ausgewählte Verbindungen der Formel VII sind Vinylacetat, Allylacetat, Vinylpropionat, Vinylbutyrat, Vinyl-2-ethylhexanoat oder Vinyllaurat.

In einer Ausführungsform kann man auf den weiteren Schritt der Abtrennung von nicht abreagiertem (D) von den erfindungsgemäß hergestellten Copolymerisaten verzichten. In dieser Ausführungsform setzt man Copolymerisate zusammen mit einem gewissen Prozentsatz an nicht abreagiertem (D) zur Herstellung von Leder oder als Zusatz in Reinigungs- oder Waschmitteln ein.

Durch die oben beschriebene Copolymerisation erhält man Copolymerisate. Die anfallenden Copolymerisate kann man einer Reinigung nach konventionellen Methoden unterziehen, beispielsweise Umfällen oder extraktiver Entfernung nicht-umgesetzter Monomere. Wenn ein Lösemittel oder Fällungsmittel eingesetzt wurde, so ist es möglich, dieses nach beendeter Copolymerisation zu entfernen, beispielsweise durch Abdestillieren.

Im Anschluss an die Copolymerisation setzt man die Copolymerisate mit Wasser oder mit wässriger alkalischer Lösung um und erhält wässrige Lösungen oder Dispersionen von Copolymerisaten, die partiell oder vollständig hydrolysiert sein können. Dieser Schritt wird im Folgenden auch Hydrolyse genannt.

Die Hydrolyse führt man erfindungsgemäß so durch, dass man die erfindungsgemäß hergestellten Copolymerisate mit Wasser oder wässriger alkalischer Lösung, wie beispielsweise von Alkalimetallhydroxiden wie z.B. Natriumhydroxid oder Kaliumhydroxid, Alkalicarbonaten wie z.B. Natriumcarbonat oder Kaliumcarbonat, Alkalihydrogencarbonaten wie Kaliumhydrogencarbonat, von Ammoniak, primären, sekundären oder tertiären Alkylaminen oder Alkanolaminen umsetzt. Geeignet sind insbesondere Natronlauge oder Kalilauge. Man setzt beispielsweise etwa 30 bis 150 Gew.-% Wasser oder wässrige alkalische Lösung, bezogen auf erfindungsgemäß hergestelltes Copolymerisat, ein.
Man kann zur Hydrolyse verdünnte wässrige Säure einsetzen wie beispielsweise 0,5 bis 5 Gew.-% Schwefelsäure oder 0,5 bis 10 Gew.-% Zitronensäure.

Die Temperatur während der Hydrolyse ist im Allgemeinen unkritisch. Geeignet sind im Allgemeinen 15 bis 100°C, bevorzugt 20 bis 100°C, besonders bevorzugt bis 90°C. Üblicherweise ist die Hydrolyse nach 10 Minuten bis 4 Stunden beendet.

Im Anschluss an die Hydrolyse gibt man erneut Initiator zu, beispielsweise Peroxide oder Hydroperoxide. Als Peroxide bzw. Hydroperoxide seien tert.-Butylhydro-peroxid und Wasserstoffperoxid beispielhaft genannt. Auch der Einsatz von Redoxinitiatoren ist geeignet, beispielsweise Kombinationen aus Wasserstoffperoxid oder Natriumperoxodisulfat oder einem der vorstehend genannten Peroxide mit einem Reduktionsmittel. Als Reduktionsmittel sind beispielsweise geeignet: Ascorbinsäure, Weinsäure, Fe(II)-Salze wie beispielsweise FeSO₄, Natriumbisulfit, Kaliumbisulfit.

Als Initiatoren sind außerdem Azoverbindungen wie 2,2'-Azobis(isobutyronitril), 2,2'-Azobis(2-methylpropion-amidin)dihydrochlorid und 2,2'-Azobis(4-methoxy-2,4-dimethylvaleronitril) geeignet. Besonders bevorzugt sind Wasserstoffperoxid, Natriumperoxodisulfat und tert.-Butylhydroperoxid und Redoxinitiatoren.

Im Allgemeinen setzt man bei der erneuten Zugabe Initiator in Mengen von 0,1 bis 20 Gew.-% zu, vorzugsweise 0,2 bis 15 Gew.-%, berechnet auf die Masse aller Comonomeren.

Man kann den gleichen Initiator zusetzen, den man für die Initiierung der Copolymerisation eingesetzt hat, oder bevorzugt mindestens einen anderen Initiator.

Im Anschluss an die erneute Zugabe von Initiator kann man nachreagieren lassen, beispielsweise über einen Zeitraum von 0,5 bis 5 Stunden.

In einer Ausführungsform der vorliegenden Erfindung führt man die erneute Zugabe von Initiator und gegebenenfalls das Nachreagieren bei einer Temperatur im Bereich von 20 bis 100°C durch, bevorzugt von 25 bis 70°C.

In einer Ausführungsform der vorliegenden Erfindung führt man die erneute Zugabe von Initiator und gegebenenfalls das Nachreagieren bei einem Druck im Bereich von O,5 bis 10 bar durch, bevorzugt bei Normaldruck.

In einer Ausführungsform der vorliegenden Erfindung führt man die erneute Zugabe von Initiator und gegebenenfalls das Nachreagieren nach der Hydrolyse und vor der Neutralisation durch.

In einer Ausführungsform der vorliegenden Erfindung führt man die Zugabe von Redoxinitiatoren nach der Hydrolyse durch. Zuerst wird Oxidationsmittel zugegeben und nach der Neutralisation Reduktionsmittel. Das Nachreagieren erfolgt vor und nach der Neutralisation.

Man erhält wässrige Dispersionen oder wässrige Lösungen von erfindungsgemäß hergestellten Copolymerisaten, im Folgenden auch als wässrige Dispersionen von Copolymerisaten bezeichnet, in denen die bei der Reaktion mit (D) nicht umgesetzten Anhydridgruppen vollständig oder partiell hydrolysiert sind und Carbonsäuregruppen frei oder in Form ihrer Alkalisalze oder Ammoniumsalze vorliegen.

Ein weiterer Gegenstand der vorliegenden Erfindung sind Copolymerisate, erhältlich nachdem erfindungsgemäßen Verfahren.

Erfindungsgemäße Copolymerisate fallen üblicherweise in Form von wässrigen Dispersionen oder wässrigen Lösungen an. Aus erfindungsgemäßen wässrigen Dispersionen lassen sich erfindungsgemäße Copolymerisate durch dem Fachmann an sich bekannte Methoden isolieren, beispielsweise durch Verdampfen von Wasser oder durch Sprühtrocknen.

Die Polydispersität erfindungsgemäßer Copolymerisate liegt im Allgemeinen zwischen 2 und 20, bevorzugt bis 15.

Die K-Werte erfindungsgemäßer Copolymerisate betragen 6 bis 100, vorzugsweise 10 bis 60 (gemessen nach H. Fikentscher bei 25 °C in Wasser und einer Polymerkonzentration von 2 Gew.-%).

Erfindungsgemäße Copolymerisate können betreffend (A), (B) und gegebenenfalls (C) Blockcopolymerisate, alternierende Copolymerisate oder statistische Copolymerisate sein, wobei in Bezug auf (A) und (B) alternierende Copolymerisate bevorzugt sind.

Die Farbzahl, auch APHA-Farbzahl genannt, von 33 Gew.-% wässrigen Lösungen von erfindungsgemäßem Copolymerisat liegt unter 150, bevorzugt unter 100, gemessen nach Hazen nach EN 1557: Farbmetrische Charakterisierung von optisch klaren, gefärbten Flüssigkeiten.

In einer Ausführungsform der vorliegenden Erfindung beträgt die Extinktion von 33 Gew.-% wässrigen Lösungen von erfindungsgemäßem Copolymerisat bei 450 nm maximal 0,25.

In einer Ausführungsform der vorliegenden Erfindung enthalten erfindungsgemäße Copolymerisate im Bereich von 1 bis 100 ppm Restmonomer, bestimmt durch Gaschromatographie nach der im Dispersionshandbuch, Kapitel C 2.4.7.4 (1994), beschriebenen Methode. Als Restmonomer wird im Falle der vorliegenden Erfindung im Copolymerisat frei vorliegendes (B) bezeichnet.

Für viele Anwendungen ist es nicht notwendig, erfindungsgemäßes Copolymerisat zu isolieren; man kann in vielen Anwendungen die durch das erfindungsgemäße Verfahren anfallenden wässrigen Dispersionen oder wässrigen Lösungen ohne weitere Aufarbeitung einsetzen. Wässrige Dispersionen und Lösungen, enthaltend erfindungsgemäßes Copolymerisat, sind daher ebenfalls Gegenstand der vorliegenden Erfindung.

In einer Ausführungsform der vorliegenden Erfindung haben erfindungsgemäße wässrige Dispersionen und Lösungen, enthaltend erfindungsgemäßes Copolymerisat, einen pH-Wert im Bereich von 4 bis 8, bevorzugt 5 bis 7.

In einer Ausführungsform der vorliegenden Erfindung haben erfindungsgemäße wässrige Dispersionen und Lösungen, enthaltend erfindungsgemäßes Copolymerisat, einen Feststoffgehalt im Bereich von 30 bis 70 Gew.-%, bevorzugt 40 bis 65 %-Gew.

Ein weiterer Gegenstand der vorliegenden Erfindung ist die Verwendung der erfindungsgemäßen Copolymerisate zur Herstellung von Leder. Ein weiterer Gegenstand der vorliegenden Erfindung ist ein Verfahren zur Herstellung von Leder unter Verwendung der erfindungsgemäßen Copolymerisate.

Erfindungsgemäße Copolymerisate kann man in der Vorgerbung, Gerbung oder Nachgerbung einsetzen.

Das erfindungsgemäße Verfahren zur Herstellung von Leder kann man als Verfahren zum Vorgerben oder Gerben ausüben, im Folgenden dann auch erfindungsgemäßes Gerbverfahren genannt. Das erfindungsgemäße Gerbverfahren geht aus von nach konventionellen Methoden vorbehandelten Häuten von Tieren wie beispielsweise Rindern, Schweinen, Ziegen oder Hirschen, den sogenannten Blößen. Dabei ist es für das erfindungsgemäßen Gerbverfahren nicht wesentlich, ob die Tiere beispielsweise durch Schlachten getötet wurden oder aber an natürlichen Ursachen verendet sind. Zu den konventionellen Methoden der Vorbehandlung gehören beispielsweise das Äschern, Entkälken, Beizen und Pickeln sowie mechanische Arbeitsschritte, beispielsweise die Entfleischung der Häute.

Das erfindungsgemäße Gerbverfahren übt man im Allgemeinen so aus, dass man erfindungsgemäßes Copolymerisat in einer Portion oder in mehreren Portionen unmittelbar vor oder aber während des Gerbungsschrittes zusetzt. Das erfindungsgemäße Gerbverfahren wird vorzugsweise bei einem pH-Wert von 2,5 bis 4 durchgeführt, wobei man häufig beobachtet, dass der pH-Wert während der Durchführung des erfindungsgemäßen Gerbverfahrens um etwa 0,3 bis drei Einheiten ansteigt. Man kann den pH-Wert auch durch Zugabe abstumpfender Mittel um etwa 0,3 bis drei Einheiten erhöhen.

Das erfindungsgemäße Gerbverfahren führt man im Allgemeinen bei Temperaturen von 10 bis 45°, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Variante des erfindungsgemäßen Gerbverfahrens setzt man erfindungsgemäßes Copolymerisat zusammen mit einem oder mehreren herkömmlichen Gerbstoffen ein, beispielsweise mit Chromgerbstoffen, mineralischen Gerbstoffen, Syntanen, Polymergerbstoffen oder vegetabilen Gerbstoffen, wie sie beispielsweise beschrieben sind in *Ullmann's Encyclopedia of Industrial Chemistry*, Band A15, Seite 259 bis 282 und insbesondere Seite 268 ff., 5. Auflage, **(1990),** Verlag Chemie Weinheim. Das Gewichtsverhältnis erfindungsgemäßes Copolymerisat : herkömmlicher Gerbstoff bzw. Summe der herkömmlichen Gerbstoffe beträgt zweckmäßig von 0,01 : 1 bis 100 : 1.

In einer Variante des erfindungsgemäßen Gerbverfahrens setzt man erfindungsgemäßes Copolymerisat in einer Portion oder in mehreren Portionen vor oder während des Vorgerbens zu, in einer besonderen Variante bereits im Pickel.

Man kann das erfindungsgemäße Verfahren zur Herstellung von Leder auch als Verfahren zum Nachgerben von Leder unter der Verwendung von erfindungsgemäßem Copolymerisat durchführen, im Folgenden auch erfindungsgemäßes Nachgerbverfahren genannt. Das erfindungsgemäße Nachgerbverfahren geht aus von konventionell, d.h. beispielsweise mit Chromgerbstoffen, mineralischen Gerbstoffen, Polymergerbstoffen, Aldehyden, Syntanen oder Harzgerbstoffen gegerbten Halbzeugen oder erfindungsgemäß wie oben beschrieben hergestellten Halbzeugen. Zur Durchführung des erfindungsgemäßen Nachgerbung lässt man erfindungsgemäßes Copolymerisat auf Halbzeuge einwirken.

Das erfindungsgemäße Nachgerbverfahren kann man unter ansonsten üblichen Bedingungen durchführen. Man wählt zweckmäßig einen oder mehrere, d.h. 2 bis 6 Einwirkschritte und kann zwischen den Einwirkschritten mit Wasser spülen. Die Temperatur bei den einzelnen Einwirkschritten beträgt jeweils von 5 bis 60°C, bevorzugt 20 bis 45°C. Man setzt zweckmäßig weitere, während der Nachgerbung üblicherweise verwendete Mittel ein, beispielsweise Fettlicker, Polymergerbstoffe und Fettungsmittel auf Acrylat- und/oder Methacrylatbasis, Nachgerbstoffe auf Basis von Harz- und Vegetabilgerbstoffen, Füllstoffe, Lederfarbstoffe oder Emulgatoren.

Ein weiterer Aspekt der vorliegenden Erfindung sind Leder, hergestellt durch das erfindungsgemäße Gerbverfahren oder das erfindungsgemäße Nachgerbverfahren oder durch eine Kombination aus erfindungsgemäßem Gerbverfahren und erfindungsgemäßen Nachgerbverfahren. Die erfindungsgemäßen Leder zeichnen sich durch eine insgesamt vorteilhafte Qualität aus, beispielsweise sind sie besonders weich. Die erfindungsgemäßen Leder enthalten erfindungsgemäßes Copolymerisat besonders gleichmäßig über den Querschnitt verteilt.

Ein weiterer Aspekt der vorliegenden Erfindung ist die Verwendung der erfindungsgemäßen Leder zur Herstellung von Bekleidungsstücken, Möbeln oder Autoteilen. Unter Bekleidungsstücke sind im Sinne der vorliegenden Erfindung beispielsweise Jacken, Hosen, Schuhe, Gürtel oder Hosenträger zu nennen. Unter Möbeln sind im Zusammenhang mit der vorliegenden Erfindung alle solchen Möbel zu nennen, die Bestandteile aus Leder enthalten. Beispielhaft seien Sitzmöbel genannt wie etwa Sessel, Stühle, Sofas. Unter Autoteilen seien beispielhaft Autositze genannt.

Ein weiterer Aspekt der vorliegenden Erfindung sind Bekleidungsstücke, enthaltend die oder hergestellt aus erfindungsgemäßen Ledern. Ein weiterer Aspekt der vorliegenden Erfindung sind Möbel, enthaltend die oder hergestellt aus erfindungsgemäßen Ledern. Ein weiterer Aspekt der vorliegenden Erfindung sind Autoteile, enthaltend die oder hergestellt aus erfindungsgemäßen Ledern.

Ein weiterer Aspekt der vorliegenden Erfindung ist die Verwendung der erfindungsgemäßen Copolymerisate als Zusatz in Wasch- und Reinigungsmitteln sowie ein Verfahren zur Reinigung von textilen Substraten unter Verwendung der erfindungsgemäßen Copolymerisate.

Erfindungsgemäße Copolymerisate eignen sich vorteilhaft als Zusatz für Reinigungsmittel, insbesondere für Reinigungsmittel für harte Oberflächen, wie Geschirrspül- und Haushaltsreiniger, und Waschmittel.

Erfindungsgemäße Copolymerisate zeichnen sich dabei insbesondere durch folgende vorteilhafte Anwendungseigenschaften aus, die sie für den Einsatz in Waschmitteln besonders geeignet machen: Sie dispergieren Schmutzpartikel hervorragend und verhindern so während des Waschens eine Wiederablagerung des Schmutzes auf dem Gewebe. Sie beugen damit einer Vergrauung der Textilien vor. Außerdem verbessern sie die Primärwaschkraft sowohl von festen und insbesondere flüssigen Waschmitteln. Dies gilt besonders für partikuläre Anschmutzungen, aber auch hydrophobe, öl- und fetthaltige Gewebeanschmutzungen werden leichter entfernt. Zudem lassen sie sich problemlos in feste und flüssige Waschmittelformulierungen einarbeiten. Dabei ist hervorzuheben, dass Stabilität und Homogenität der Flüssigwaschmittel durch erfindungsgemäßen Copolymerisate nicht beeinträchtigt werden. Unerwünschte Phasenbildungen, Trübungen, Ausfällungen und Farbveränderungen werden auch bei längerer Lagerung nicht beobachtet.

Gegenstand der Erfindung sind demgemäß auch Waschmittelformulierungen, welche erfindungsgemäßen Copolymerisate als Zusatz enthalten. Die erfindungsgemäßen Copolymere können dabei in Form der freien Säuren oder in partiell oder vollständig neutralisierter Form eingesetzt werden.

Erfindungsgemäße feste Waschmittelformulierungen enthalten insbesondere folgende Komponenten:
a) 0,05 bis 20 Gew.-% mindestens eines erfindungsgemäßen Copolymers,
(b) 0,5 bis 40 Gew.-% mindestens eines nichtionischen, anionischen und/oder kationischen Tensids,
(c) 0,5 bis 50 Gew.-% mindestens eines anorganischen Builders,
(d) 0 bis 10 Gew.-% eines organischen Cobuilders und
(e) 0 bis 60 Gew.-% anderer üblicher Inhaltsstoffe, wie Stellmittel, Enzyme, Parfum, Komplexbildner, Korrosionsinhibitoren, Bleichmittel, Bleichaktivatoren, Bleichkatalysatoren, Farbübertragungsinhibitoren, weitere Vergrauungsinhibitoren, Soil-Release-Polyester, Faser- und Farbschutzadditve, Silicone, Farbstoffe, Bakterizide, Auflösungsverbesserer und/oder Sprengmittel,
wobei die Summe der Komponenten (a) bis (e) 100 Gew.-% ergibt.

Erfindungsgemäße feste Waschmittelformulierungen können in Pulver-, Granulat-, Extrudat- oder Tablettenform vorliegen.

Erfindungsgemäße flüssige Waschmittelformulierungen haben vorzugsweise folgende Zusammensetzung:
(a) 0,05 bis 20 Gew.-% mindestens eines erfindungsgemäßen Copolymers,
(b) 0,5 bis 40 Gew.-% mindestens eines nichtionischen, anionischen und/oder kationischen Tensids,
(c) 0 bis 20 Gew.-% mindestens eines anorganischen Builders,
(d) 0 bis 10 Gew.-% eines organischen Cobuilders,
(e) 0 bis 60 Gew.-% anderer üblicher Inhaltsstoffe, wie Soda, Enzyme, Parfum, Komplexbildner, Korrosionsinhibitoren, Bleichmittel, Bleichaktivatoren, Bleichkatalysatoren, Farbübertragungsinhibitoren, weitere Vergrauungsinhi-bitoren , Soil-Release-Polyester, Faser- und Farbschutzadditve, Silicone, Farbstoffe, Bakterizide, organische Lösungsmittel, Löslichkeitsvermittler, Hydrotrope, Verdicker und/oder Alkanolamine und
(f) 0 bis 99,45 Gew.-% Wasser.

Als nichtionische Tenside (b) eignen sich dabei vor allem:
- Alkoxylierte C₈-C₂₂-Alkohole, wie Fettalkoholalkoxylate, Oxoalkoholalkoxylate und Guerbetalkoholalkoxylate: Die Alkoxylierung kann mit C₂-C₂₀ -Alkylenoxiden, vorzugsweise mit Ethylenoxid, Propylenoxid und/oder Butylenoxid erfolgen. Es können Blockcopolymerisate oder statistische Copolymere vorliegen. Pro mol Alkohol enthalten sie üblicherweise 1 bis 50 mol, vorzugsweise 1 bis 20 mol, mindestens eines Alkylenoxids. Besonders bevorzugtes Alkylenoxid ist Ethylenoxid. Die Alkohole haben vorzugsweise 10 bis 18 Kohlenstoffatome.
- Alkylphenolalkoxylate, insbesondere Alkylphenolethoxylate, die C₆-C₁₄-Alkylketten und 5 bis 30 mol Alkylenoxid/mol enthalten.
- Alkylpolyglucoside, die C₈-C₂₂, vorzugsweise C₁₀-C₁₈-Alkylketten und in der Regel 1 bis 20, vorzugsweise 1,1 bis 5, Glucosideinheiten enthalten.
- N-Alkylglucamide, Fettsäureamidalkoxylate, Fettsäurealkanolamidalkoxylate sowie Blockcopolymere aus Ethylenoxid, Propylenoxid und/oder Butylenoxid.

Geeignete anionische Tenside sind beispielsweise:
- Sulfate von (Fett)alkoholen mit 8 bis 22, vorzugsweise 10 bis 18, Kohlenstoffatomen, insbesondere C₉C₁₁-Alkoholsulfate, C₁₂C₁₄-Alkoholsulfate, C₁₂-C₁₈-Alkoholsulfate, Laurylsulfat, Cetylsulfat, Myristylsulfat, Palmitylsulfat, Stearylsulfat und Talgfettalkoholsulfat.
- Sulfatierte alkoxylierte C₈-C₂₂-Alkohole (Alkylethersulfate): Verbindungen dieser Art werden beispielsweise dadurch hergestellt, daß man zunächst einen C₈-C₂₂-, vorzugsweise einen C₁₀-C₁₈-Alkohol, z.B. einen Fettalkohol, alkoxyliert und das Alkoxylierungsprodukt anschließend sulfatiert. Für die Alkoxylierung verwendet man vorzugsweise Ethylenoxid.
- Lineare C₈-C₂₀-Alkylbenzolsulfonate (LAS), vorzugsweise lineare C₉-C₁₃-Alkylbenzolsulfonate und -Alkyltoluolsulfonate.
- Alkansulfonate, insbesondere C₈-C₂₄-, vorzugsweise C₁₀-C₁₈-Alkansulfonate.
- Seifen, wie die Na- und K-Salze von C₈-C₂₄-Carbonsäuren.

Anionisches Tensid wird dem Waschmittel vorzugsweise in Form von Salzen zugegeben. Geeignete Kationen sind dabei z.B. Alkalimetallionen, wie Natrium, Kalium und Lithium, und Ammoniumsalze, wie Hydroxyethylammonium-, Di(hydroxyethyl)-ammonium- und Tri(hydroxyethyl)ammoniumsalze.

Als besonders geeignete kationische Tenside seien genannt:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln IX oder X 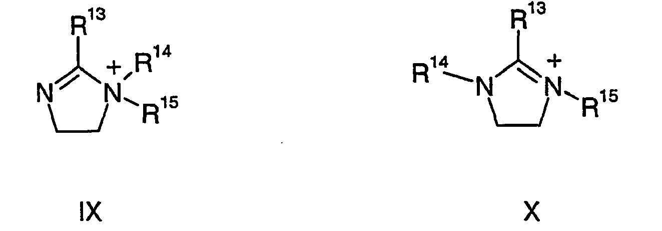 in denen die Variablen folgende Bedeutung haben:
   - R¹³: gleich oder verschieden und gewählt aus C₁-C₂₅-Alkyl oder C₂-C₂₅-Alkenyl;
   - R¹⁴: C₁-C₄-Alkyl oder Hydroxy-C₁-C₄-alkyl;
   - R¹⁵: C₁-C₄-Alkyl, Hydroxy-C₁-C₄-alkyl oder Rest R¹⁶-(CO)-X-(CH₂)ₚ- (X:-O- oder -NH-; p: 2 oder 3),
   - R¹⁶: gewählt aus C₇-C₂₂-Alkyl.

Als anorganische Builder eignen sich insbesondere:
- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist.
- Kristalline Silikate, wie insbesondere Disilikate und Schichtsilikate, z.B. δ- und β-Na₂Si₂O₅. Die Silikate können in Form ihrer Alkalimetall-, Erdalkalimetall- oder Ammoniumsalze eingesetzt werden, bevorzugt sind die Na-, Li- und Mg-Silicate.
- Amorphe Silikate, wie Natriummetasilikat und amorphes Disilikat.
- Carbonate und Hydrogencarbonate: Diese können in Form ihrer Alkalimetall-, Erdalkalimetall- oder Ammoniumsalze eingesetzt werden. Bevorzugt sind Na-,U- und Mg-Carbonate und -Hydrogencarbonate, insbesondere Natriumcarbonat und/oder Natriumhydrogencarbonat.
- Polyphosphate, wie Pentanatriumtriphosphat.

Als organische Cobuilder eignen sich vor allem:
- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)iminodiessigsäure, Ethylendiamindibernsteinsäure und Methyl- und Ethylglycindiessigsäure.
- Oligomere und polymere Carbonsäuren, wie Homopolymere von Acrylsäure und Asparaginsäure, Oligomaleinsäuren, Copolymere der Maleinsäure mit Acrylsäure, Methacrylsäure oder C₂-C₂₂-Olefinen, z.B. Isobuten oder langkettigen α-Olefinen, Vinyl-C₁-C₈-alkylether, Vinylacetat, Vinylpropionat, (Meth)Acrylsäureester von C₁-C₈-Alkoholen und Styrol, Copolymere der Acrylsäure mit Methacrylsäure oder C₂-C₂₂-0iefinen, z.B. Isobuten oder langkettigen α-Olefinen, Vinyl-C₁-C₈-alkylether, Vinylacetat, Vinylpropionat, (Meth)Acrylsäureester von C₁-C₈-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt. Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethyl-sulfat.

Vorzugsweise in Waschmitteln eingesetzte Enzyme sind Proteasen, Lipasen, Amylasen, Cellulasen, Oxidasen und Peroxidasen.

Geeignete Farbübertragungsinhibitoren sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Weitere Waschmittelinhaltsstoffe sind bekannt. Detaillierte Beschreibungen sind z. B. in WO 99/06524 und WO 99/04313; in "Liquid Detergents", Editor: Kuo-Yann Lai, Surfactant Sci. Ser., Vol. 67, Marcel Decker, New York, 1997, p. 272-304, zu finden. Es wurde außerdem gefunden, dass man erfindungsgemäße Copolymerisate und wässrige Dispersionen oder Lösungen von erfindungsgemäßem Copolymerisat als Dispergiermittel und Belagsverhinderer in Reinigern für harte Oberflächen verwenden kann. Gegenstand der vorliegenden Erfindung ist daher die Verwendung von erfindungsgemäßen Copolymerisaten und von wässrigen Dispersionen oder Lösungen von erfindungsgemäßem Copolymerisat als Zusatzmittel für Reiniger für harte Oberflächen. Ein weiterer Gegenstand der vorliegenden Erfindung sind Reiniger für harte Oberflächen, enthaltend erfindungsgemäßes Copolymerisat. Ein weiterer Gegenstand der vorliegenden Erfindung ist ein Verfahren zur Reinigung von harten Oberflächen unter Verwendung von erfindungsgemäßem Copolymerisat oder von wässrigen Dispersionen oder Lösungen von erfindungsgemäßem Copolymerisat.

Unter Reinigern für harte Oberflächen sollen beispielsweise Reiniger für die Metall-, Kunststoff-, Glas- und Keramikreinigung, Fußbodenreiniger, Sanitärreiniger, Allzweckreiniger im Haushalt und in gewerblichen Anwendungen, technische Reiniger (für den Einsatz in Autowaschanlagen oder Hochdruckreinigern), Kaltreiniger, Geschirreiniger, Klarspüler, Desinfektionsreiniger, Reiniger für die Nahrungsmittel- und Getränkeindustrie, insbesondere als Flaschenreiniger, als CIP-Reiniger (Cleaning-in-Place) in Molkereien, Brauereien und sonstigen Betrieben von Nahrungsmittelherstellern verstanden werden. Reiniger, welche erfindungsgemäßes Copolymerisat enthalten, eignen sich besonders zum Reinigen harter Oberflächen wie Glas, Kunststoff und Metall. Die Reiniger können alkalisch, sauer oder neutral eingestellt sein. Sie enthalten üblicherweise ein oder mehrere Tenside in Mengen von etwa 0,2 bis 50 Gew.-%. Dabei kann es sich um anionische, nicht-ionische oder kationische Tenside sowie um Mischungen von Tensiden handeln, die miteinander verträglich sind, z.B. Mischungen aus anionischen und nicht-ionischen oder aus kationischen und nicht-ionischen Tensiden. Alkalische Reiniger können enthalten Soda, Pottasche, Natriumhydrogencarbonat, Kaliumhydrogencarbonat, Natriumsesquicarbonat, Kaliumsesquicarbonat, Natriumhydroxid, Kaliumhydroxid, Aminbasen wie Monoethanolamin, Diethanolamin, Triethanolamin, Ammoniak oder Silikat in Mengen bis zu 60 Gew.-%, in einigen Fällen sogar bis zu 80 Gew.-%. Erfindungsgemäße Reiniger für harte Oberflächen können außerdem Zitrate, Glukonate oder Tartrate in Mengen bis zu 80 Gew.-% enthalten. Erfindungsgemäße Reiniger für harte Oberflächen können in fester oder in flüssiger Form vorliegen.

In einer Ausführungsform der vorliegenden Erfindung ist erfindungsgemäßes Copolymerisat in erfindungsgemäßen Reinigern für harte Oberflächen in Mengen von 0,1 bis 20, vorzugsweise 0,2 bis 15 Gew.-% enthalten.

Die Erfindung wird durch Arbeitsbeispiele erläutert.

### 1. Synthesevorschrift für Copolymerisation und Veresterung

Alle Reaktionen wurden - wenn nicht anders angegeben - unter einer Atmosphäre von Stickstoff durchgeführt.

Die K-Werte der erfindungsgemäßen Copolymerisate wurden nach H. Fikentscher, Cellulose-Chemie, Band 13, 58-64 und 761-774 (1932) in wässriger Lösung bei 25 °C und einer Polymerkonzentration von 2 Gew.-% bestimmt. Die Farbzahlen der erfindungsgemäßen Copolymerisate wurden nach Hazen (APHA-Farbzahlen) bestimmt. Die in Tabelle 1 angegebenen APHA-Farbzahlen wurden mit einem LICO 200-Gerät der Firma Dr. Lange gemessen. Die Proben wurden dabei als 33 Gew.-%ige wässrige Lösungen vermessen.

### 1.1. Copolymerisat Cop1 bis Cop10

108 g (1,10 mol) Maleinsäureanhydrid wurden in x₁ g (x₂ mol) des Alkoholalkoxylats (D) gelöst und unter Rühren in einer Stickstoffatmosphäre auf 90 °C erhitzt. Bei dieser Temperatur wurden innerhalb von zwei Stunden 6 g *tert*. Butylperoctoat, gelöst in y₁ g (y₂ mol) des Alkoholalkoxylats (D), und eine Lösung von 0,54 g Hydrochinonmonomethylether in z₁ g (z₂ mol) Styrol langsam zugetropft. Das erhaltene Reaktionsgemisch wurde dann eine Stunde bei 90 °C und anschließend 4 Stunden bei 120 °C gerührt, wobei ein braunes Öl entstand. Es wurde auf 50 °C abgekühlt. Das Öl wurde in 500 g Wasser aufgenommen und mit a₁ g einer wässrigen Wasserstoffperoxidlösung (30 Gew.-%) versetzt. Die Lösung wurde mit 50 Gew.-% Natronlauge auf einen pH-Wert von 6 bis 7 eingestellt. Nach 10 Minuten Rühren bei 50 °C wurden a₂ g Ascorbinsäure zugegeben. Das Reaktionsgemisch wurde zwei Stunden bei 50 °C gerührt und anschließend auf Raumtemperatur abgekühlt.

Es wurden 30 bis 50 Gew.-% dünnviskose Lösungen von erfindungsgemäßen Copolymerisaten erhalten. Weitere Einzelheiten sind in Tabelle 1 zusammengestellt.

Als Alkoholalkoxylate (D) wurden eingesetzt:
- D1:: Polyethylenglykolmonomethylether mit mittlerem Molekulargewicht Mₙ von 350 g/mol
- D2:: Polyethylenglykolmonomethylether mit mittlerem Molekulargewicht Mₙ von 500 g/mol
- D3:: Polyethylenglykolmonomethylether mit mittlerem Molekulargewicht Mₙ von 1000 g/mol
- D4: Polyalkylenmono-n-Butylether (EO + PO) mit mittlerem Molekulargewicht Mₙ von 1000 g/mol
- D5:: Ethoxylierter C₁₃-C₁₅-Alkohol (7 mol EO/mol)
- D6:: Ethoxylierter-, Propoxylierter C₁₃-C₁₅-Alkohol (4 mol PO/mol, 16 mol EO/mol, statistisch)

**Tabelle 1:**

| Copolymerisat | D | x₁ [g] (x₂ [mol]) | y₁ [g] (y₂ [mol]) | z₁ [g] (z₂ [mol]) | a₁ [g] / a₂ [g] | APHA-Farbzahl | K-Wert |
|---|---|---|---|---|---|---|---|
| Cop1 | D1 | 230 (0,66) | 155(0,44) | 114 (1,10) | 20/0 | 86 | 33 |
| Cop2 | D2 | 330(0,66) | 220(0,44) | 114(1,10) | 19/1,9 | 28 | 31 |
| Cop3 | D2 | 500 (1,00) | 50 (0,10) | 112 (1,08) | 23/0 | 74 | 31 |
| Cop4 | D2 | 500 (1,00) | 50 (0,10) | 104 (1,00) | 18/1,8 | 124 | 32 |
| Cop5 | D2 | 365 (0,73) | 20 (0,04) | 114 (1,10) | 15/1,5 | 39 | 44 |
| Cop6 | D3 | 660 (0,66) | 440(0,44) | 114 (1,10) | 20/0 | 77 | 27 |
| Cop7 | D4 | 660 (0,66) | 440 (0,44) | 112 (1,08) | 25/0 | 94 | 21 |
| Cop8 | D5 | 440 (0,88) | 110 (0,22) | 108 (1,04) | 18/1,8 | 81 | 32 |
| Cop9 | D6 | 750 (0,66) | 500 (0,44) | 114 (1,10) | 30 / 0 | 55 | 18 |
| Cop10 | D6 | 400 (0,32) | 12,5(0,01) | 112 (1,08) | 15/1,5 | 33 | 38 |

| | | | | | | | |
|---|---|---|---|---|---|---|---|
| Verwendete Abkürzungen: EO: Ethylenoxid, PO: Propylenoxid | | | | | | | |

### 1.2. Copolymerisate Cop11 und Cop12

108 g (1,10 mol) Maleinsäureanhydrid wurden in einer Mischung aus x₁ g (x₂ mol) des Alkoholalkoxylats (D) und y₁ g (y₂ mol) eines zweiten Alkoholalkoxylats (D) gelöst und unter Rühren in einer Stickstoffatmosphäre auf 90 °C erhitzt. Bei dieser Temperatur wurden innerhalb von zwei Stunden 6 g *tert*. Butylperoctoat, gelöst in 5 ml des ersten Alkoholalkoxylats (D), und eine Lösung von 0,54 g Hydrochinonmonomethylether in z₁ g (z₂ mol) Styrol langsam zugetropft. Das erhaltene Reaktionsgemisch wurde dann eine Stunde bei 90 °C und anschließend 4 Stunden bei 120 °C gerührt, wobei ein bräunliches Öl entstand. Es wurde auf 50 °C abgekühlt. Das Öl wurde in 700 g Wasser aufgenommen und mit a₁ g einer wässrigen Wasserstoffperoxidlösung (30 Gew.-%) versetzt. Die Lösung wurde mit 50 Gew.-% Natronlauge auf einen pH-Wert von 6 bis 7 eingestellt. Nach 10 Minuten Rühren bei 50 °C wurden a₂ g Weinsäure zugegeben.

Das Reaktionsgemisch wurde zwei Stunden bei 50 °C gerührt und anschließend auf Raumtemperatur abgekühlt.

Es wurden 30 bis 50 Gew.-% dünnviskose Lösungen von erfindungsgemäßen Copolymerisaten erhalten. Weitere Einzelheiten sind in Tabelle 2 zusammengestellt.

Als Alkoholalkoxylate (D) wurden eingesetzt:
- D2:: Polyethylenglykolmonomethylether mit einem mittleren Molekulargewicht Mₙ von 500 g/mol
- D5:: Ethoxylierter C₁₃-C₁₅-Alkohol (7 mol EO/mol)
- D7:: Polyethylenglykolmonomethylether mit einem mittleren Molekulargewicht Mₙ von 2000 g/mol

**Tabelle 2:**

| Copolymerisat | D | x₁ [g] (x₂ [mol]) | y₁ [g] (y₂ [mol]) | z₁ [g] (z₂ [mol]) | a₁ [g] / a₂ [g] | APHA-Farbzahl | K-Wert |
|---|---|---|---|---|---|---|---|
| Cop11 | D2/D7 | D2 275 (0,55) | D7 280 (0,14) | 112 (1,08) | 20/0 | 54 | 28 |
| Cop12 | D2/D5 | D2 440 (0,88) | D5 111 (0,22) | 112 (1,08) | 19/1,9 | 49 | 33 |

### 1.3. Copolymerisate C13 bis C14

108 g (1,10 mol) Maleinsäureanhydrid wurde in 550 g (1,10 mol) D2) gelöst und unter Rühren in einer Stickstoffatmosphäre auf 95 °C erhitzt. Bei 95 °C wurden innerhalb von zwei Stunden 6 g *tert*. Butylperoctoat, gelöst in 5 ml des Alkoholalkoxylats (D), und eine Lösung von 0,54 g Hydrochinonmonomethylether in 112 g (1,08 mol) Styrol langsam zugetropft. Das erhaltene Reaktionsgemisch wurde dann eine Stunde bei 95 °C gerührt und mit x₁ g Säure versetzt. Das Reaktionsgemisch wurde y₃ Stunden bei 95 C gerührt, wobei ein braunes Öl entstand. Es wurde auf 50 °C abgekühlt. Das Öl wurde in 700 g Wasser aufgenommen und mit 18 g einer wässrigen Wasserstoffperoxidlösung (30%) versetzt. Die Lösung wurde mit 50 Gew.-% Natronlauge auf einen pH-Wert von 6 bis 7 eingestellt. Das Reaktionsgemisch wurde zwei Stunden bei 50 °C gerührt und anschließend auf Raumtemperatur abgekühlt.

Es wurden 30 bis 50 Gew.-% dünnviskose Lösungen von erfindungsgemäßen Copolymerisaten erhalten. Weitere Einzelheiten sind in Tabelle 3 zusammengestellt.

**Tabelle 3:**

| Copolymerisat | Säure | x₁ [g] | y₃ [h] | APHA-Farbzahl | K-Wert |
|---|---|---|---|---|---|
| Cop13 | p-Toluolsulfonsäure | 7,7 | 1,0 | 55 | 23 |
| Cop14 | Methansulfonsäure | 3,8 | 0,5 | 68 | 22 |

### 1.4. Copolymerisate Cop15 bis Cop17

108 g (1,10 mol) Maleinsäureanhydrid wurden in x₁ g (x₂ mol) D gelöst und unter Rühren in einer Stickstoffatmosphäre auf 95 °C erhitzt. Bei dieser Temperatur wurden innerhalb von zwei Stunden 6 g *tert*. Butylperoctoat, gelöst in 5 ml von Alkoholalkoxylat (D), und eine Lösung von 0,54 g Hydrochinonmonomethylether und y₁ g (y₂ mol) Acrylsäure in z₁ g (z₂ mol) Styrol langsam zugetropft. Das erhaltene Reaktionsgemisch wurde dann eine Stunde bei 95 °C und anschließend 4 Stunden bei 120 °C gerührt, wobei ein braunes Öl entstand. Es wurde auf 50 °C abgekühlt. Das Öl wurde in 700 g Wasser aufgenommen und mit 18 g einer wässrigen Wasserstoffperoxidlösung (30 Gew.-%) versetzt. Die Lösung wurde mit 50 Gew.-% Natronlauge auf einen pH-Wert von 6 bis 7 eingestellt. Das Reaktionsgemisch wurde zwei Stunden bei 50 °C gerührt und anschließend auf Raumtemperatur abgekühlt.

Es wurde eine 48 Gew.-% dünnviskose Copolymerisatlösungen erhalten.

**Tabelle 4:**

| Copolymerisat | D | x₁ [g] (x₂ [mol]) | y₁ [g] (y₂ [mol]) | z₁ [g] (z₂ [mol]) | APHA-Farbzahl | K-Wert |
|---|---|---|---|---|---|---|
| Cop15 | D2 | 550 (1,10) | 16 (0,22) | 92 (0,88) | 74 | 51 |
| Cop16 | D3 | 550 (0,55) | 16 (0,22) | 92 (0,88) | 85 | 50 |
| Cop17 | D5 | 555 (1,10) | 16 (0,22) | 92 (0,88) | 105 | 40 |

### Vergleichsbeispiel V2:

Nach dem in der EP-A 0 945 473 (Nat. Starch) beschriebenen Verfahren (Herstellbeispiel 7) wurde ein Copolymerisat aus Styrol, Maleinsäureanhydrid, CARBOWAX 550, NEODOL 25-9 und NEODOL 25-7 (1/1/1,3/0,04/0,10) hergestellt. Die APHA-Farbzahl betrug 236.

### II. Anwendungstechnische Prüfung

### 2.1 Anwendung in der Nachgerbung von Leder - Herstellung von Schuhoberleder

Ein handelsübliches Rinder-Wetblue (Fa. Packer, USA) wurden auf eine Stärke von 1,8-2,0 mm gefalzt und in sechs Streifen zu je ca. 1000 g geschnitten. Anschließend wurden die Streifen in einem Fass (30 l) und einer Flottenlänge von 200 Gew.-% im Abstand von 10 Minuten mit 2 Gew.-% Natriumformiat und 0,4 Gew.-% NaHCO₃ sowie 1 Gew.-% eines Naphthalinsulfonsäure-Formaldehyd-Kondensationsprodukts, hergestellt nach US 5,186,846, Beispiel "Dispergiermittel 1", versetzt. Nach 90 Minuten wurde die Flotte abgelassen. Die Streifen wurden dann auf separate Walk-Fässer verteilt.

Zusammen mit 100 Gew.-% Wasser wurden die Fässer 1 bis 6 bei 25 bis 35°C mit je 1 Gew.-% einer 50 Gew.-% (Feststoffgehalt) wässrigen Lösung von Farbstoffen dosiert, deren Feststoffe wie folgt zusammen gesetzt waren:
70 Gewichtsteile Farbstoff aus EP-B 0 970 148, Beispiel 2.18,
30 Gewichtsteile Acid Brown 75 (Eisenkomplex), Colour Index 1.7.16;
und 10 Minuten im Fass gewalkt.

Entsprechend wurden die Gerbfässer 5 bis 8 mit je 100 Gew.-% Wasser und mit je 1 Gew.-% einer 50 Gew.-% einer wässrigen Lösung des Farbstoffs aus DE-A 197 40 473, Beispiel 4.3 beschickt.

Anschließend wurden wie in Tabelle 5 angegeben je 6 Gew.-% erfindungsgemäßes Copolymerisat gemäß Tabelle 1, gefolgt von 4 Gew.-% Sulfongerbstoff aus EP-B 0 459 168, Beispiel K1. Danach wurden die Streifen 45 Minuten bei 15 Umdrehungen/min im Fass gewalkt. Danach wurden 2 Gew.-% Vegetabilgerbstoff Mimosa® zugesetzt. Nach 30 Minuten wurden weitere 1,5 Gew.-% des jeweiligen Farbstoffs nachdosiert.

Anschließend wurde mit Ameisensäure auf einen pH-Wert von 3,6-3,8 abgesäuert. Nach 20 Minuten wurden die Flotten durch ein optisches Verfahren bzgl. der Auszehrung bewertet und abgelassen. Die Leder wurden danach mit 200 Gew.-% Wasser gewaschen. Zuletzt wurden in 100 % Wasser bei 50 °C 6 Gew.-% eines Lipodermlicker® CMG dosiert. Nach einer Walkzeit von 45 Minuten wurde mit 1 % Gew.-% Ameisensäure abgesäuert und mit Wasser gewaschen.

Die gewaschenen Leder wurden getrocknet und gestollt.

Sie wiesen ausgezeichnete Fülle und Festnarbigkeit bei vorzüglicher Durchfärbung der Fasern sowie eine hervorragende Egalität in der Fläche auf (Fett- und Farbstoffverteilung).

Außerdem wurde eine sehr gute Flottenstabilität beobachtet.

**Tabelle 5: eingesetzte erfindungsgemäße Copolymerisate**

| Fass | Copolymerisat |
|---|---|
| 1 | Cop 1 |
| 2 | Cop 2 |
| 3 | Cop 3 |
| 4 | Cop 4 |
| 5 | Cop 5 |
| 6 | Cop 10 |

### 2.2. Anwendung als Zusatz von Waschmitteln

Primär- und Sekundärwaschwirkung von erfindungsgemäßen Copolymerisaten wurde bestimmt.

Für die Waschversuche wurden zwei pulverförmige Waschmittelformulierungen (WM 1 und 2) und eine flüssige Waschmittelformulierung (WM 3) verwendet, deren Zusammensetzung in Tabelle 6 wiedergegeben ist. Die Waschbedingungen sind in Tabelle 7 aufgeführt.

**Tabelle 6**

| | WM1 | WM2 | WM3 |
|---|---|---|---|
| Inhaltsstoffe | [Gew.-%] | [Gew.-%] | [Gew.-%] |
| n-C₁₂H₂₅-C₆H₄SO₃Na | 5,0 | 12,0 | 17,4 |
| n-C₁₃H₂₇O(CH₂-CH₂O)₇H | 5,0 | 3,0 | |
| n-C₁₂H₂₅O(CH₂-CH₂O)₇H | | | 5,4 |
| Seife | 1,4 | | |
| Kokosfettsäure | | | 1 |
| Zeolith A | 30,0 | 20,0 | |
| Natriumcarbonat | 14,0 | 15,0 | 0,5 |
| Natriummetasilikat x 5 H₂O | 3,6 | 10 | |
| Natriumperborat Tetrahydrat | 21,0 | | |
| Tetraacetylethylendiamin | 6,0 | | |
| CMC | 1,2 | 1,0 | |
| Cumolsulfonat Natriumsalz | | | 1,5 |
| Natriumsulfat | 4,5 | 36,5 | |
| Wasser | auf 100 | auf 100 | auf 100 |

| | | | |
|---|---|---|---|
| Unter "auf 100" ist zu verstehen, dass auf 100 Gew.-% aufzufüllen ist. | | | |

**Tabelle 7: Waschbedingungen**

| | |
|---|---|
| Gerät | Launder-o-meter der Fa. Atlas, Chicago, USA |
| Waschflotte | 250 ml |
| Waschdauer | 30 min bei 40°C |
| Waschmitteldosierung | WM 1: 4,5 g/l |
| | WM 2: 1,5 g/l |
| | WM 3: 1,5 g/l |
| Wasserhärte | WM 1: 3 mmol/l Ca : Mg : HCO₃ 4 : 1 : 8 |
| | WM 2 und WM 3: 1 mmol/l Ca : Mg : HCO₃ 3 : 2 : 8 |
| Flottenverhältnis | WM 1: 1 : 12,5 |
| | WM 2 und WM 3: 1 : 20 |
| Waschcyclen | 1 |
| Copolymerzugabe | 2,5 Gew.-%, bezogen auf das jeweilige WM |
| Prüfgewebe | 2,5 g Baumwollgewebe 221 (gebleicht, Flächengewicht 132 g/m²) ("BW 221") Fisat |
| | 2,5 g Mischgewebe 768 (65:35 PES:BW, gebleicht, Flächengewicht 155 g/m²) ("MG 768") |
| Schmutzgewebe | 5 g Baumwollgewebe 290 (Köperware, gebleicht, Flächengewicht 193 g/m²) ("BW 290") |
| | angeschmutzt mit einer 1:1:1-Mischung aus 3 Tonsorten (Na/Al-Silikatanteil des Schmutzgewebes 4,53 Gew.-%) |
| Tonsorten | Niederahrer rotbrennender Ton 178/RI |
| | Hessischer braunbrennender Manganton 262 |
| | Gelbbrennender Ton 158/G |
| | alle Fa. Jäger KG, Hilgert, Deutschland |
| Ballastgewebe | WM 1: 10 g PES-Ballastgewebe |
| | WM 2 und WM 3: 2,5 g PES-Ballastgewebe |

Zur Ermittlung der Primärwaschwirkung wurde der Weißgrad des Schmutzgewebes vor und nach dem Waschen mit einem Photometer der Fa. Datacolor (Elrepho^{®} 2000) anhand der Remission (%) gemessen. Das Primärwaschvermögen ist umso besser, je höher der Remissionswert ist.
Die erhaltenen Ergebnisse sind in Tabelle 8 zusammengestellt.

**Tabelle 8 Ergebnisse der Waschexperimente (Primärwaschwirkung)**

| Waschmittel | Zusatz Copolymerisat (2,5 Gew.-%) | Baumwolle 290 |
|---|---|---|
| | | Remission in % |
| | | |
| | | |
| ungewaschen | | 17,1 |
| | | |
| WM 1 | ohne | 25,1 |
| WM 1 | Copolymerisat 7 | 27,3 |
| WM 1 | Copolymerisat 9 | 27,1 |
| WM 1 | Copolymerisat 15 | 28,6 |
| | | |
| WM 2 | ohne | 24,5 |
| WM 2 | Copolymerisat 1 | 26,6 |
| WM 2 | Copolymerisat 2 | 27,4 |
| WM 2 | Copolymerisat 3 | 29,0 |
| WM 2 | Copolymerisat 6 | 28,3 |
| WM 2 | Copolymerisat 13 | 27,9 |
| WM 2 | Copolymerisat 15 | 28,1 |
| | | |
| WM 3 | Ohne | 24,2 |
| WM 3 | Copolymerisat 3 | 26,7 |

Zur Ermittlung der Sekundärwaschwirkung wurde die Vergrauung der weißen Prüfgewebe durch Weißgradbestimmung vor und nach der Wäsche mit einem Photometer der Fa. Datacolor (Elrepho^{®} 2000) anhand der Remission (%) gemessen. Je höher der Abfall im Weißgrad ist, desto stärker ist die Vergrauung des Gewebes und umgekehrt. Die erhaltenen Ergebnisse sind in Tabelle 9 zusammengestellt.

**Tabelle 9: Ergebnisse der Waschexperimente (Sekundärwaschwirkung)**

| Waschmittel | Zusatz Copolymerisat (2,5 Gew.-%) | BW 221 | MG 768 |
|---|---|---|---|
| | | Remission in % | Remission in % |
| ungewaschen | | 83,2 | 84,9 |
| | | | |
| WM 1 | ohne | 63,7 | 62,5 |
| WM 1 | Copolymerisat 1 | 67,0 | 65,7 |
| WM 1 | Copolymerisat 2 | 67,9 | 65,8 |
| WM 1 | Copolymerisat 3 | 66,5 | 68,0 |
| WM 1 | Copolymerisat 5 | 66,2 | 64,5 |
| WM 1 | Copolymerisat 6 | 71,6 | 67,7 |
| WM 1 | Copolymerisat 7 | | |
| WM 1 | Copolymerisat 9 | | |
| WM 1 | Copolymerisat 15 | 68,5 | 68,5 |
| WM 1 | Copolymerisat 16 | 67,7 | 67,0 |
| WM 1 | Copolymerisat 17 | 67,1 | 65,7 |
| | | | |
| WM 2 | ohne | 61,1 | 61,1 |
| WM 2 | Copolymerisat 1 | 63,5 | 65,6 |
| WM 2 | Copolymerisat 2 | 64,9 | 65,6 |
| WM 2 | Copolymerisat 3 | 64,5 | 63,6 |
| WM 2 | Copolymerisat 5 | 65,1 | 66,8 |
| WM 2 | Copolymerisat 6 | 64,1 | 63,5 |
| WM 2 | Copolymerisat 7 | 64,2 | 63,7 |
| WM 2 | Copolymerisat 13 | 64,9 | 64,4 |
| WM 2 | Copolymerisat 15 | 65,1 | 66,3 |
| | | | |
| WM 3 | ohne | 63,5 | 62,8 |
| WM 3 | Copolymerisat 2 | 65,9 | 67,1 |
| WM 3 | Copolymerisat 3 | 66,5 | 68,0 |
| WM 3 | Copolymerisat 5 | 66,6 | 67,5 |
| WM 3 | Copolymerisat 7 | 65,3 | 67,0 |
| WM 3 | Copolymerisat 13 | 67,2 | 69,3 |
| WM 3 | Copolymerisat 15 | 67,3 | 68,5 |

## Patentansprüche

1. Verfahren zur Herstellung von Copolymerisaten, **dadurch gekennzeichnet, dass** man
(A) mindestens ein ethylenisch ungesättigtes Dicarbonsäureanhydrid (A), abgeleitet von mindestens einer Dicarbonsäure mit 4 bis 8 C-Atomen,
(B) mindestens eine vinylaromatische Verbindung und
(C) optional mindestens ein von (A) verschiedenes ethylenisch ungesättigtes Comonomer mit mindestens einem Heteroatom
copolymerisiert,
(D) mit mindestens einer Verbindung der allgemeinen Formel I a oder I b 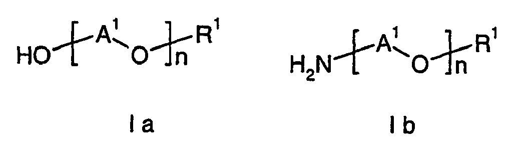 umsetzt,
mit Wasser oder wässriger alkalischer Lösung hydrolysiert,
und nach der Hydrolyse erneut Initiator zugibt,
wobei in Formel I a und I b die Variablen wie folgt definiert sind:
A¹ C₂-C₂₀-Alkylen, gleich oder verschieden
R¹ C₁-C₃₀-Alkyl, linear oder verzweigt,
n eine ganze Zahl von 1 bis 200.

2. Verfahren nach Anspruch 1, **dadurch gekennzeichnet, dass** es sich bei (B) um Styrol handelt.

3. Verfahren nach einem der Ansprüche 1 bis 2, **dadurch gekennzeichnet, dass** das Molverhältnis von (A) zu (C) im Bereich von 1:0 bis 1:10 liegt.

4. Verfahren nach einem der Ansprüche 1 bis 3, **dadurch gekennzeichnet, dass** das Molverhältnis (A) zu [(B) + (C)] im Bereich von 2:1 bis 1:20 liegt.

5. Verfahren nach einem der Ansprüche 1 bis 4, **dadurch gekennzeichnet, dass** (C) gewählt wird aus ethylenisch ungesättigten C₃-C₈-Carbonsäurederivaten der allgemeinen Formel II 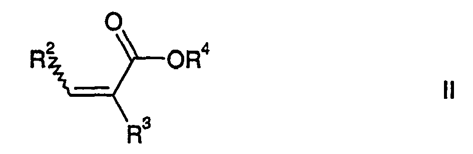 Carbonsäureamiden der Formel III, 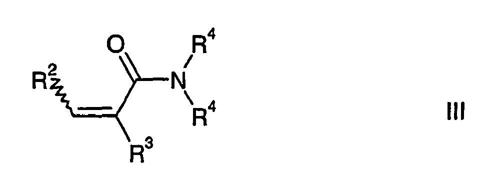 nicht-cyclischen Amiden der allgemeinen Formel IV a oder cyclischen Amiden der allgemeinen Formel IV b 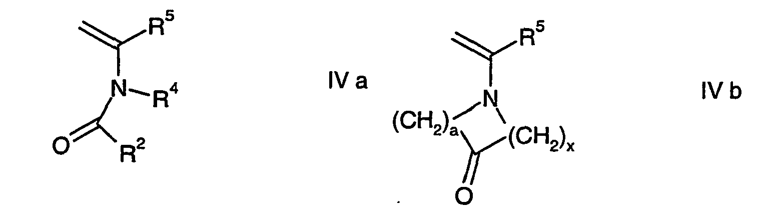 C₁-C₂₀-Alkyl-Vinylethern,
N·Vinyl-Derivaten von stickstoffhaltigen aromatischen Verbindungen, α,β-ungesättigten Nitrilen,
alkoxylierten ungesättigten Ethern der allgemeinen Formel V 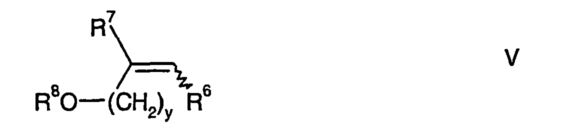 Estern oder Amiden der allgemeinen Formel VI 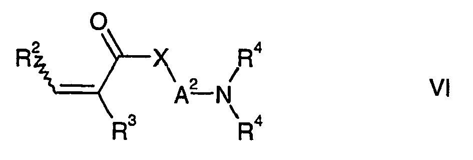 ungesättigten Estern der allgemeinen Formel VII 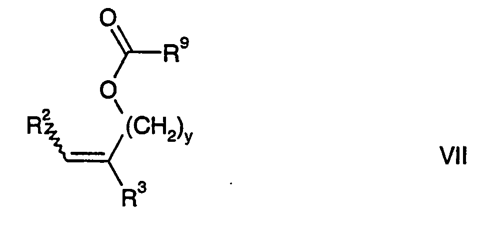 Phosphat-, Phosphonat-, Sulfat- und Sulfonatgruppen-haltige Comonomere,
wobei in den allgemeinen Formeln die Variablen wie folgt definiert sind:
A² C₂-C₂₀-Alkylen
R², R³ gleich oder verschieden und gewählt aus Wasserstoff, unverzweigten oder verzweigten C₁-C₅-Alkyl,
R⁴ gleich oder verschieden und gewählt aus Wasserstoff oder C₁-C₂₂-Alkyl, verzweigt oder unverzweigt,
R⁵ Wasserstoff oder Methyl,
x eine ganze Zahl im Bereich von 2 bis 6,
y eine ganze Zahl, ausgewählt aus 0 oder 1,
a eine ganze Zahl im Bereich von 0 bis 6,
R⁶, R⁷ gleich oder verschieden und gewählt aus Wasserstoff, unverzweigten oder verzweigten C₁-C₁₀-Alkyl,
X Sauerstoff oder N-R⁴
R⁸ [A¹-O]ₙ-R⁴,
R⁹ gleich oder verschieden und gewählt aus Wasserstoff, unverzweigten oder verzweigten C₁-C₁₀-Alkyl
und die übrigen Variablen wie oben stehend definiert sind.

6. Verfahren nach einem der Ansprüche 1 bis 5, **dadurch gekennzeichnet, dass** man die Hydrolyse bei Temperaturen im Bereich von 15 bis 100 °C durchführt.

7. Verfahren nach einem der Ansprüche 1 bis 6, **dadurch gekennzeichnet, dass** man (A) und (D) vorlegt und während der Copolymerisation (B) sowie gegebenenfalls (C) zudosiert.

8. Copolymerisate, erhältlich durch ein Verfahren nach einem der Ansprüche 1 bis 7.

9. Copolymerisate nach Anspruch 8, **dadurch gekennzeichnet, dass** ihre 33 Gew.-% wässrige Lösungen eine Farbzahl nach Hazen von höchstens 150 aufweisen.

10. Wässrige Dispersionen und Lösungen, enthaltend Copolymerisate nach Anspruch 8 oder 9.

11. Verwendung von Copolymerisaten nach Anspruch 8 oder 9 oder von wässrigen Dispersionen oder Lösungen nach Anspruch 10 zur Herstellung von Leder.

12. Verfahren zur Herstellung von Leder unter Verwendung von Copolymerisaten nach einem der Ansprüche 8 oder 9 oder von wässrigen Dispersionen oder Lösungen nach Anspruch 10.

13. Leder, hergestellt durch ein Verfahren nach Anspruch 12.

14. Verwendung von Ledern nach Anspruch 12 zur Herstellung von Bekleidungsstücken oder Möbeln oder Autoteilen.

15. Verwendung von Copolymerisaten nach Anspruch 8 oder 9 oder von wässrigen Dispersionen oder Lösungen nach Anspruch 10 als Zusatz in Wasch- oder Reinigungsmitteln.

16. Wasch- oder Reinigungsmittel, enthaltend Copolymerisate nach Anspruch 8 oder 9 oder wässrige Dispersionen oder Lösungen nach Anspruch 10.

17. Verfahren zur Reinigung von textilen Substraten unter Verwendung von Copolymerisaten nach Anspruch 8 oder 9 oder von wässrigen Dispersionen oder Lösungen nach Anspruch 10.

18. Verwendung von Copolymerisaten nach Anspruch 8 oder 9 oder von wässrigen Dispersionen oder Lösungen nach Anspruch 10 als Zusatzmittel für Reiniger für harte Oberflächen.

19. Reiniger für harte Oberflächen, enthaltend Copolymerisate nach Anspruch 8 oder 9 oder wässrige Dispersionen oder Lösungen nach Anspruch 10.

20. Verfahren zum Reinigen von harten Oberflächen unter Verwendung von Copolymerisaten nach Anspruch 8 oder 9 oder von wässrigen Dispersionen oder Lösungen nach Anspruch 10.

## Claims

1. A process for preparing a copolymer which comprises copolymerizing
(A) at least one ethylenically unsaturated dicarboxylic anhydride (A) derived from at least one dicarboxylic acid having 4 to 8 carbon atoms,
(B) at least one vinylaromatic compound, and
(C) optionally at least one non-(A) ethylenically unsaturated comonomer containing at least one heteroatom,
(D) reacting the copolymer with at least one compound of the formula I a or I b 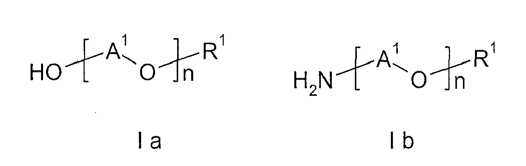 where
A¹ is C₂-C₂₀ alkylene, identical or different,
R¹ is C₁-C₃₀ alkyl, linear or branched, and
n is an integer from 1 to 200,
hydrolyzing the product with water or an aqueous alkaline solution, and
subsequent to hydrolysis adding further initiator.

2. The process according to claim 1, wherein (B) is styrene.

3. The process according to claim 1 or 2, wherein the molar ratio of (A) to (C) is from 1:0 to 1:10.

4. The process according to any one of claims 1 to 3, wherein the molar ratio of (A) to [(B) + (C)] is from 2:1 to 1:20.

5. The process according to any one of claims 1 to 4, wherein (C) is selected from ethylenically unsaturated C₃-C₈ carboxylic acid derivatives of the formula II, 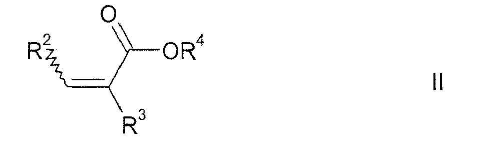 carboxamides of the formula III, 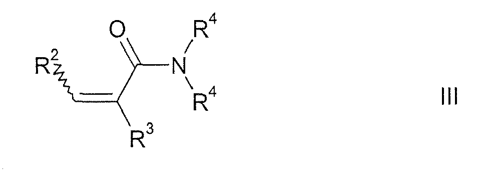 noncyclic amides of the formula IV a and cyclic amides of the formula IV b, 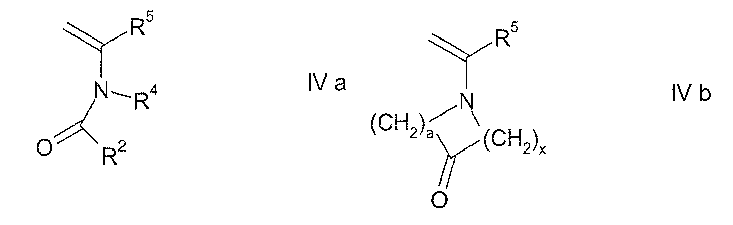 C₁-C₂₀ alkyl vinyl ethers,
N-vinyl derivatives of aromatic nitrogen compounds,
α,β-unsaturated nitriles,
alkoxylated unsaturated ethers of the formula V, 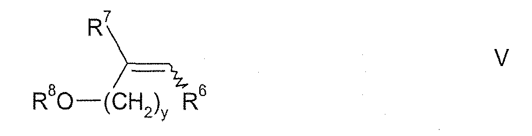 esters or amides of the formula VI, 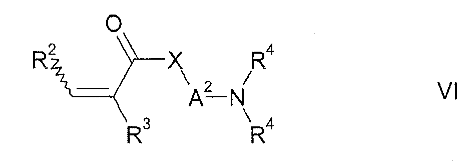 unsaturated esters of the formula VII, 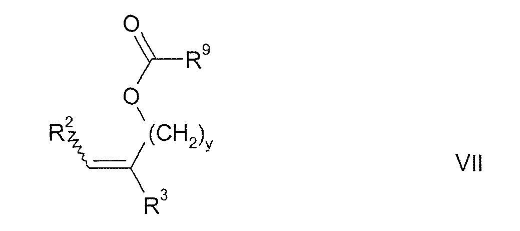 and
phosphate-, phosphonate-, sulfate-, and sulfonate-functional comonomers,
where
A² is C₂-C₂₀ alkylene
R² and R³ are identical or different and are selected from hydrogen and branched or unbranched C₁-C₅ alkyl,
R⁴ is identical or different at each occurrence and is selected from hydrogen and C₁-C₂₂ alkyl, branched or unbranched,
R⁵ is hydrogen or methyl,
x is an integer from 2 to 6,
y is an integer 0 or 1,
a is an integer from 0 to 6,
R⁶ and R⁷ are identical or different and are selected from hydrogen and branched or unbranched C₁-C₁₀ alkyl,
X is oxygen or N-R⁴,
R⁸ is [A¹-O]ₙ-R⁴,
R⁹ is identical or different at each occurrence and is selected from hydrogen and branched or unbranched C₁-C₁₀-alkyl, and
the remaining variables are as defined above.

6. The process according to any one of claims 1 to 5, wherein the hydrolysis is conducted at temperatures in the range from 15 to 100°C.

7. The process according to any one of claims 1 to 6, wherein (A) and (D) are introduced initially and (B) and, where used, (C) are metered in during the copolymerization.

8. A copolymer obtainable by the process according to any one of claims 1 to 7.

9. The copolymer according to claim 8, whose 33% strength by weight aqueous solution has a Hazen color number of not more than 150.

10. An aqueous dispersion or solution comprising the copolymer according to claim 8 or 9.

11. The use of the copolymer according to claim 8 or 9 or of the aqueous dispersion or solution according to claim 10 for producing leather.

12. A process for producing leather using the copolymer according to claim 8 or 9 or the aqueous dispersion or solution according to claim 10.

13. Leather produced by the process according to claim 12.

14. The use of leather according to claim 12 for producing apparel, furniture or automotive parts.

15. The use of the copolymer according to claim 8 or 9 or the aqueous dispersion or solution according to claim 10 as an additive to detergent.

16. A detergent comprising the copolymer according to claim 8 or 9 or an aqueous dispersion or solution according to claim 10.

17. A method of cleaning textile substrates using the copolymer according to claim 8 or 9 or an aqueous dispersion or solution according to claim 10.

18. The use of the copolymer according to claim 8 or 9 or the aqueous dispersion or solution according to claim 10 as an additive to hard surface cleaner.

19. A hard surface cleaner comprising the copolymer according to claim 8 or 9 or an aqueous dispersion or solution according to claim 10.

20. A method of cleaning hard surfaces using the copolymer according to claim 8 or 9 or the aqueous dispersion or solution according to claim 10.

## Revendications

1. Procédé de préparation de copolymères, **caractérisé en ce qu'**on copolymérise
(A) au moins un anhydride d'acide dicarboxylique éthyléniquement insaturé (A), dérivé d'au moins un acide dicarboxylique comportant 4 à 8 atomes de C,
(B) au moins un composé vinyl-aromatique, et
(C) éventuellement au moins un comonomère éthyléniquement insaturé, différent de (A), comportant au moins un hétéroatome,
on fait réagir
(D) avec au moins un composé de la formule générale I a ou I b : 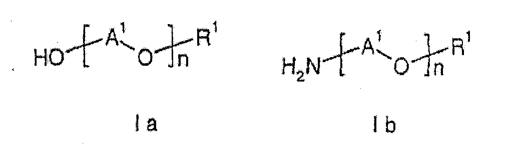 on hydrolyse avec de l'eau ou une solution alcaline aqueuse, et
après l'hydrolyse on ajoute à nouveau un agent d'amorçage,
les variables dans les formules I a et I b étant définies comme suit :
A¹ sont identiques ou différents et représentent des groupes alkylène en C₂-C₂₀,
R¹ représente un groupe alkyle en C₁-C₃₀, linéaire ou ramifié,
n est un nombre entier de 1 à 200.

2. Procédé suivant la revendication 1, **caractérisé en ce que**, pour ce qui concerne (B), il s'agit de styrène.

3. Procédé suivant l'une des revendications 1 et 2, **caractérisé en ce que** le rapport molaire entre (A) et (C) est de l'ordre de 1/0 à 1/10.

4. Procédé suivant l'une des revendications 1 à 3, **caractérisé en ce que** le rapport molaire (A) et [(B)+(C)] est de l'ordre de 2/1 à 1/20.

5. Procédé suivant l'une des revendications 1 à 4, **caractérisé en ce que** (C) est choisi parmi des dérivés d'acide carboxylique en C₃-C₈ éthyléniquement insaturés de la formule générale II : 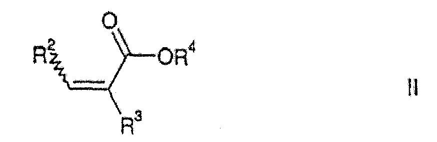 des amides d'acide carboxylique de la formule III : 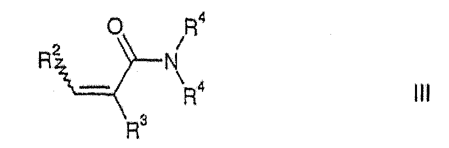 des amides non cycliques de la formule générale IV a ou des amides cycliques de la formule générale IV b : 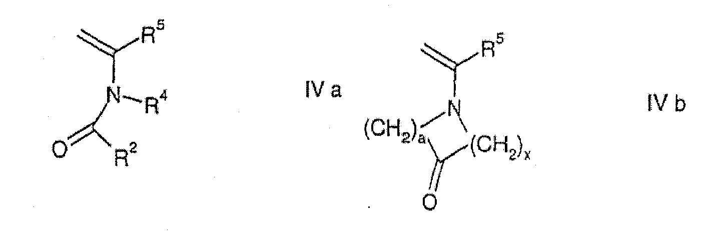 des éthers C₁-C₂₀-alkyl-vinyliques,
des dérivés N-vinyliques de composés aromatiques contenant de l'azote,
des nitriles α,β-insaturés,
des éthers insaturés, alcoxylés, de la formule générale V : 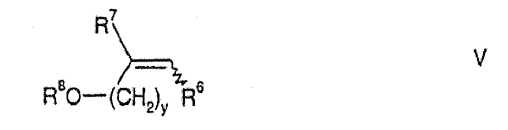 des esters ou amides de la formule générale VI : 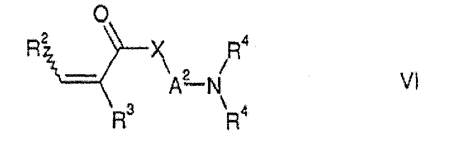 des esters insaturés de la formule générale VII : 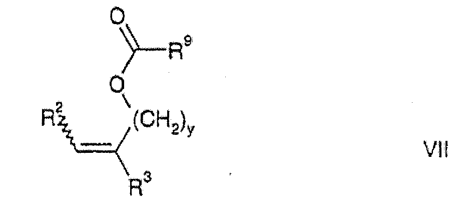 des comonomères contenant des groupes phosphate, phosphonate, sulfate et sulfonate,
les variables des formules générales étant définies comme suit :
A² représente un groupe alkylène en C₂-C₂₀,
R², R³ sont identiques ou différents et choisis parmi de l'hydrogène ou un groupe alkyle en C₁-C₅ ramifié ou non ramifié,
R⁴ sont identiques ou différents et choisis parmi de l'hydrogène ou un groupe alkyle en C₁-C₂₂, ramifié ou non ramifié,
R⁵ représente de l'hydrogène ou du méthyle,
x est un nombre entier de l'ordre de 2 à 6,
y est un nombre entier choisi parmi 0 et 1,
a est un nombre entier de l'ordre de 0 à 6,
R⁶, R⁷ sont identiques ou différents et choisis parmi de l'hydrogène ou un groupe alkyle en C₁-C₁₀ ramifié ou non ramifié,
X représente de l'oxygène ou N-R⁴,
R⁸ représente [A¹-O]ₙ-R⁴,
R⁹ sont identiques ou différents et choisis parmi de l'hydrogène ou un groupe alkyle en C₁-C₁₀ ramifié ou non ramifié,
les autres variables étant définies comme précédemment.

6. Procédé suivant l'une des revendications 1 à 5, **caractérisé en ce qu'**on effectue l'hydrolyse à des températures de l'ordre de 15 à 100°C.

7. Procédé suivant l'une des revendications 1 à 6, **caractérisé en ce qu'**on introduit (A) et (D) et, pendant la copolymérisation, on ajoute en dosant (B) ainsi qu'éventuellement (C).

8. Copolymères que l'on peut obtenir par un procédé suivant l'une des revendications 1 à 7.

9. Copolymères suivant la revendication 8, **caractérisés en ce que** leurs solutions aqueuses à 33 % en poids présentent un indice colorimétrique selon Hazen d'au maximum 150.

10. Dispersions et solutions aqueuses contenant des copolymères suivant la revendication 8 ou 9.

11. Utilisation de copolymères suivant la revendication 8 ou 9 ou de dispersions ou solutions aqueuses suivant la revendication 10, pour la fabrication de cuir.

12. Procédé de préparation de cuir, avec utilisation de copolymères suivant l'une des revendications 8 ou 9 ou de dispersions ou solutions aqueuses suivant la revendication 10.

13. Cuir préparé par un procédé suivant la revendication 12.

14. Utilisation de cuirs suivant la revendication 12, pour la préparation de pièces de revêtement ou de meubles ou de parties d'automobile.

15. Utilisation de copolymères suivant la revendication 8 ou 9 ou de dispersions ou solutions aqueuses suivant la revendication 10, comme additif dans des produits de lavage ou de nettoyage.

16. Produits de lavage ou de nettoyage, contenant des copolymères suivant la revendication 8 ou 9 ou des dispersions ou solutions aqueuses suivant la revendication 10.

17. Procédé de nettoyage de substrats textiles par utilisation de copolymères suivant la revendication 8 ou 9 ou de dispersions ou solutions aqueuses suivant la revendication 10.

18. Utilisation de copolymères suivant la revendication 8 ou 9 ou de dispersions ou solutions aqueuses suivant la revendication 10 comme additif pour des produits de nettoyage de surfaces dures.

19. Produits de nettoyage pour surfaces dures, contenant des copolymères suivant la revendication 8 ou 9 ou des dispersions ou solutions aqueuses suivant la revendication 10.

20. Procédé de nettoyage de surfaces dures par utilisation de copolymères suivant la revendication 8 ou 9 ou de dispersions ou solutions aqueuses suivant la revendication 10.
